# EUROPÄISCHE PATENTSCHRIFT

(11) **EP 1 173 520 B1**
(45) Veröffentlichungstag und Bekanntmachung des Hinweises auf die Patenterteilung: **20.08.2003**
(21) Anmeldenummer: 00929390.3
(22) Anmeldetag: 19.04.2000
(51) Int. Cl.: C09B 11/02, C09B 11/26, G01N 33/533, G01N 33/58, C07H 21/00

(54) **NEUE AMIDOPYRYLIUM-FLUORESZENZ-FARBSTOFFE**
NOVEL AMIDOPYRYLIUM FLUORESCENCE DYES
NOUVEAUX COLORANTS FLUORESCENTS D'AMIDOPYRYLIUM

(30) Priorität: 27.04.1999 DE 19919120
(43) Veröffentlichungstag der Anmeldung: 23.01.2002
(73) Patentinhaber: DREXHAGE, Karl-Heinz, D-57076 Siegen (DE)
(72) Erfinder: DREXHAGE, Karl-Heinz, D-57076 Siegen (DE); ARDEN-JACOB, Jutta, D-90513 Zirndorf (DE); KEMNITZER, Norbert, D-57250 Netphen (DE)
(74) Vertreter: Weiss, Wolfgang, Dipl.-Chem. Dr.
(86) Internationale Anmeldenummer: EP0003569
(87) Internationale Veröffentlichungsnummer: WO00064987

(56) Entgegenhaltungen:
- EP-A- 0 543 333
- WO-A-97/36960
- H.HARNISCH: "Über 4-Chlor-7-dimethylamino-1-methyl-chinolon- (2)-aldehyd-(3), II." LIEBIGS ANNALEN DER CHEMIE., Bd. 751, 1971, Seiten 155-158, XP002145601 VERLAG CHEMIE GMBH. WEINHEIM., DE ISSN: 0170-2041 in der Anmeldung erwähnt
- F.P.SCHÄFER: "Topics in Applied Physics, Vol I, Dye Lasers" 1973 , SPRINGER-VERLAG , BERLIN, HEIDELBERG, NEW YORK XP002145602 006001 in der Anmeldung erwähnt K.H.Drexhage, Structure and Properties of Laser Dyes; Seite 176, Absatz 4.8.3. Naphthofluorescein and Related Dyes

## Beschreibung

Die Erfindung betrifft die Verwendung von Amidopyrylium-Verbindungen als Markierungsgruppen in Verfahren zum Nachweis von Analyten sowie neue Amidopyrylium-Verbindungen.

Xanthene zählen zu den lange bekannten und gut erforschten Fluoreszenzfarbstoffen. Ein verwandter Farbstoff mit abgewandeltem Grundgerüst, das 3,10-Bis-(dimethylamino)-5-methyl-6-oxo-6H[1]-benzopyrano[3,2-c]chinoliniumkation, wurde von H. Harnisch, Liebigs Ann. Chem. 751, 155-158 (1971), beschrieben.

Aufgrund ihrer Ähnlichkeit zu Pyranen wurden derartige Verbindungen von K.H. Drexhage, Structure and Properties of Laser Dyes, in: F.P. Schäfer, Topics in Applied Physics, Vol. I, Dye Lasers, Springer-Verlag, Berlin, Heidelberg, New York, 1973, auch als Amidopyrylium-Verbindungen bezeichnet. In dieser Veröffentlichung werden weitere als Farbstoff 140 und 141 bezeichnete Amidopyrylium-Verbindungen beschrieben. Ein Hinweis auf die Verwendung von Amidopyrylium-Verbindungen als Fluoreszenz-Markierungsgruppen in der Analytik findet sich nicht in der Literatur.

Bisher in der chemischen, medizinischen und biologischen Analytik verwendete Fluoreszenzfarbstoffe absorbieren meist im Bereich < 600 nm. Daraus ergeben sich bei einer Verwendung als Markierungsgruppe, insbesondere bei biologischen Systemen, gravierende Nachteile: Für diagnostische Systeme ist es zweckmäßig, preisgünstige Lichtquellen wie z.B. Laserdioden (635 bzw. 680 nm) oder Helium-Neon-Laser (633 nm) einsetzen zu können. Um eine wirksame Anregung eines Fluoreszenzfarbstoffs zu gewährleisten, sollte sein Absorptionsmaximum möglichst in der Nähe der Emissionswellenlänge der verwendeten Lichtquelle liegen. Dies ist jedoch bei den bekannten Farbstoffen oftmals nicht gegeben. Ferner überschneiden sich in vielen Fällen die Absorptionsspektren der bekannten Farbstoffe mit der Absorption fluoreszierender Substanzen aus biologischen Systemen. Es ist daher wünschenswert, Fluoreszenzfarbstoffe ohne die genannten Nachteile für einen zuverlässigen und genauen Nachweis eines Analyten in einem biologischen System bereitzustellen.

Zur Verwendung als Markierungsgruppe in Nachweisverfahren für Analyten ist neben einer einfachen und zuverlässigen Nachweisbarkeit eine gute Löslichkeit in verschiedenen Lösungsmitteln, insbesondere in wässrigen Systemen, notwendig. Weiterhin sollten derartige Verbindungen einfach und kostengünstig herzustellen sein und eine gute Haltbarkeit, d.h. Lagerfähigkeit, aufweisen.

Eine Aufgabe der vorliegenden Erfindung bestand somit darin, geeignete Fluoreszenzfarbstoffe zur Verwendung als Markierungsgruppe für Verfahren zum Nachweis von Analyten bereitzustellen, die insbesondere Absorptionsmaxima aufweisen, die den Einsatz von kostengünstigen Lichtquellen erlauben, außerhalb des Absorptionsbereichs von in biologischen Proben enthaltenen Stoffen absorbieren, gute Löslichkeit zeigen oder/und sich durch eine hohe Fluoreszenzquantenausbeute auszeichnen, um die Nachteile des Standes der Technik zumindest teilweise zu vermeiden.

Diese Aufgabe wurde gelöst durch die Verwendung von Verbindungen der allgemeinen Formel I 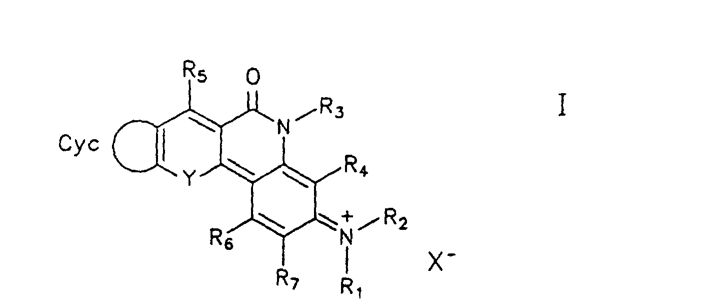 als Markierungsgruppen in einem Verfahren zum Nachweis eines Analyten, wobei
- Y: Sauerstoff oder N-R₈ bedeutet,
- R₁, R₂, R₃ und R₈: bei jedem Vorkommen unabhängig Wasserstoff, eine Phenyl-, eine Phenylalkylgruppe mit 1-3 C-Atomen in der Alkylkette, eine Polyether- oder eine Kohlenwasserstoffgruppe mit bis zu 20 C-Atomen, vorzugsweise mit bis zu 6 C-Atomen, bedeuten, die gegebenenfalls einen oder mehrere Substituenten, vorzugsweise ausgewählt aus Halogenen, Hydroxy-, Amino-, Sulfo-, Carboxy-, Carbonyl-, Alkoxy- oder/und Alkoxycarbonylgruppen, enthalten kann, oder einer oder mehrere der Reste R₁, R₂, R₃ und R₈ mit einem benachbarten Substituenten ein Ringsystem bilden, R₄, R₅, R₆ und R₇ jeweils unabhängig Wasserstoff, Halogen, Phenyl, eine Hydroxy-, Amino-, Sulfo- oder Carboxygruppe oder eine Kohlenwasserstoffgruppe mit bis zu 15 C-Atomen bedeuten, wobei die Kohlenwasserstoffgruppen Alkyl-, Alkenyl-, Alkinyl-, Cycloalkyl-, Aryl- oder/und Heteroarylreste umfassen und gegebenenfalls jeweils einen oder mehrere Substituenten, vorzugsweise ausgewählt aus Halogenen, Hydroxy-, Amino-, Sulfo-, Carboxy-, Aldehyd-, Alkoxy- oder/und Alkoxycarbonylgruppen, enthalten können,
wobei einer oder mehrere der Reste R₄, R₆ und R₇ mit einem benachbarten Substituenten ein Ringsystem bilden können,
- Cyc: einen organischen Rest bedeutet, der ein Ringsystem ausgewählt aus aromatischen, heteroaromatischen, chinoiden oder/und cycloaliphatischen Ringen umfaßt, das gegebenenfalls einen oder mehrere Substituenten, vorzugsweise ausgewählt aus Halogenen, Amino-, Hydroxy-, Sulfo-, Carboxy-, Aldehyd-, Alkoxy- oder/und Alkoxycarbonylgruppen, enthalten kann, und
- X: gegebenenfalls zum Ladungsausgleich vorhandene Anionen bedeutet.

Die Verbindungen der allgemeinen Formel I können als Markierungsgruppen in Verfahren zur qualitativen oder/und quantitativen Bestimmung eines Analyten verwendet werden. Die Bestimmung kann in wässrigen Flüssigkeiten, z.B. Proben von Körperflüssigkeiten wie etwa Blut, Serum, Plasma oder Urin, Abwasserproben oder Lebensmitteln, durchgeführt werden. Das Verfahren kann sowohl als Naßtest, z.B. in einer Küvette, oder als Trockentest auf einem entsprechenden Reagenzträger durchgeführt werden. Die Bestimmung der Analyten kann dabei über eine einzige Reaktion oder durch eine Sequenz von Reaktionen erfolgen.

Überraschenderweise zeigte die Verwendung von Verbindungen der allgemeinen Formel I sehr gute Ergebnisse in chemischen und insbesondere in medizinischen und biologischen Nachweisverfahren zur Bestimmung eines Analyten.

Die Verbindungen der allgemeinen Formel I können in allen bekannten chemischen, medizinischen und biologischen Nachweisverfahren, in denen Fluoreszenzfarbstoffe als Markierungsgruppe geeignet sind, verwendet werden. Derartige Verfahren sind dem Fachmann bekannt und müssen deshalb nicht weiter ausgeführt werden.

In einer besonders bevorzugten Ausführungsform wird die Verbindung der allgemeinen Formel I kovalent an einen für den nachzuweisenden Analyten spezifischen Rezeptor gekoppelt. Der spezifische Rezeptor ist jede geeignete Verbindung oder jedes geeignete Molekül, vorzugsweise ist es ein Peptid, Polypeptid oder eine Nukleinsäure. Die Verbindungen I oder Konjugate dieser Verbindung können beispielsweise in Nukleinsäure-Hybridisierungsverfahren oder immunchemischen Verfahren verwendet werden. Derartige Verfahren sind beispielsweise beschrieben in Sambrook et al., Molecular Cloning, A Laboratory Manual, 1989, Cold Spring Harbor.

Eine weitere Aufgabe der vorliegenden Erfindung bestand darin, neue Amidopyrylium-Verbindungen bereitzustellen, die insbesondere zur Verwendung als Markierungsgruppe in Nachweisverfahren von Analyten geeignet sind und die Nachteile des Standes der Technik zumindest teilweise vermeiden.

Diese Aufgabe wurde gelöst durch eine Verbindung der allgemeinen Formel I 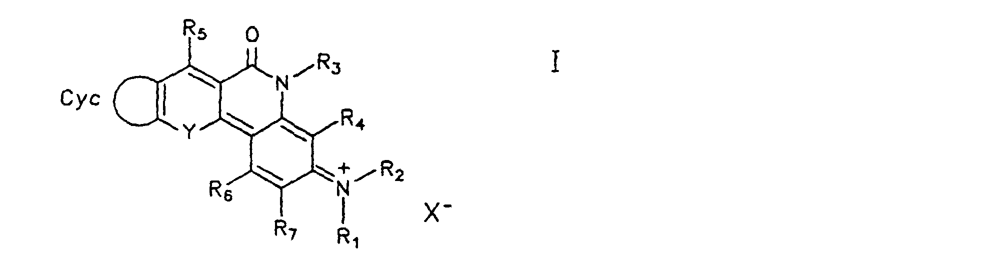 wobei
Y, R₁-R₇ und Cyc die in Anspruch 1 angegebenen Bedeutungen besitzen,
X gegebenenfalls zum Ladungsausgleich vorhandene Anionen bedeutet, mit der Maßgabe, daß wenn Y Sauerstoff, R₁, R₂ und R₃ Methyl und R₄, R₅, R₆ und R₇ Wasserstoff sind,
Cyc keine Struktur der Formeln II oder III 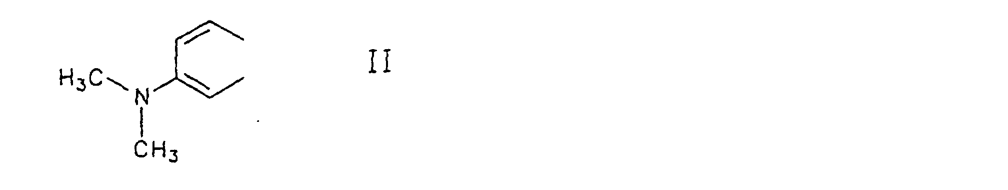 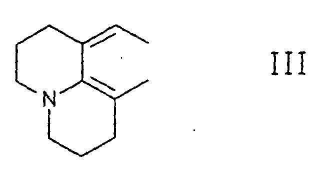
aufweist.

Ein Vorteil der Verbindungen I ist, daß durch eine fast beliebige Substituentenvariation die Eigenschaften einzelner Verbindungen, z.B. die spektroskopischen Eigenschaften, die Lage der Absorptionsmaxima, die Löslichkeitseigenschaften, die Fluoreszenzabklingzeit und die Höhe der Quantenausbeute, stark variiert und somit wie gewünscht ausgewählt werden können. Auf diese Weise können Interferenzen mit Störsubstanzen in Proben, wie etwa Serum, Blut oder Plasma etc., vermindert oder sogar ganz vermieden werden. Die Herstellung der Verbindungen I kann nach an sich bekannten Methoden auf einfache und kostengünstige Weise erfolgen, wie in den nachfolgenden Beispielen erläutert wird. Ferner sind die Verbindungen unproblematisch handhabbar. Ein weiterer Vorteil der Verbindungen I ist die große Stokes-Verschiebung der Fluoreszenz, wodurch eine gute Abtrennung der Anregungsstrahlung ermöglicht wird. Weiterhin zeichnen sich die Verbindungen durch eine hohe Stabilität aus, was sich insbesondere positiv auf ihre Lagerfähigkeit auswirkt.

Bevorzugt bedeutet Y Sauerstoff oder/und R₅ umfaßt ein aromatisches, gegebenenfalls substituiertes Ringsystem.

Die Verbindungen weisen vorzugsweise eine zur kovalenten Kopplung fähige Gruppe auf, z.B. -COOH, -NH₂, -OH oder/und -SH. Über diese Kopplungsgruppe kann die Verbindung nach bekannten Methoden an einen Träger oder/und an ein Biomolekül gekoppelt werden. Als Träger kann jedes geeignete Material ausgewählt werden, z.B. poröses Glas, Kunststoffe, lonenaustauscherharze, Dextrane, Cellulose, Cellulosederivate oder/und hydrophile Polymere. Die Biomoleküle werden vorzugsweise ausgewählt aus Peptiden, Polypeptiden, Nukleotiden, Nukleosiden, Nukleinsäuren, Nukleinsäureanaloga oder/und Haptenen.

Überraschenderweise werden das Absorptionsmaximum und die Fluoreszenzquantenausbeute durch eine Kopplung der erfindungsgemäßen Verbindungen an die oben genannten Träger und Biomoleküle nicht wesentlich verändert.

In einer bevorzugten Verbindungsklasse sind R₁ mit R₇ oder/und R₂ mit R₄ verbrückt und bilden eine Ringsystem, insbesondere mit 5- oder 6-gliedrigen Ringen. In einer besonders bevorzugten Verbindungsklasse weist Cyc in Formel I eine Struktur der Formeln IV, V oder VI 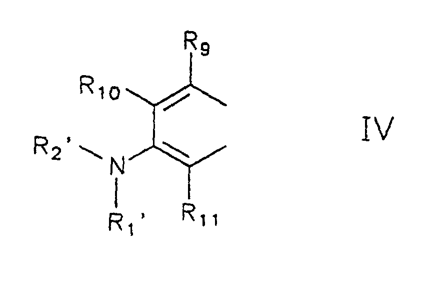 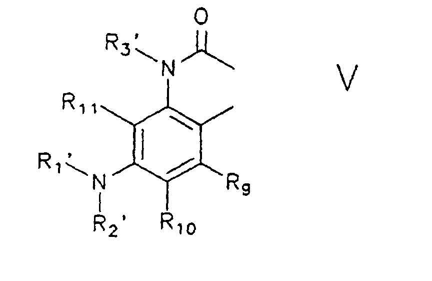 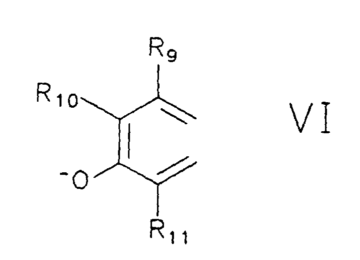 auf, wobei R₁', R₂' und R₃' wie R₁, R₂ und R₃ oben definiert sind und R₉-R₁₁ wie R₄-R₇ oben definiert sind.

In einer weiteren bevorzugten Verbindungsklasse sind R₁' mit R₁₁ oder/und R₂' mit R₁₀ verbrückt und bilden ein Ringsystem, insbesondere einen 5- oder 6-gliedrigen Ring.

Beispiele für besonders bevorzugte Verbindungsklassen sind in den allgemeinen Formeln Vlla bis f dargestellt: 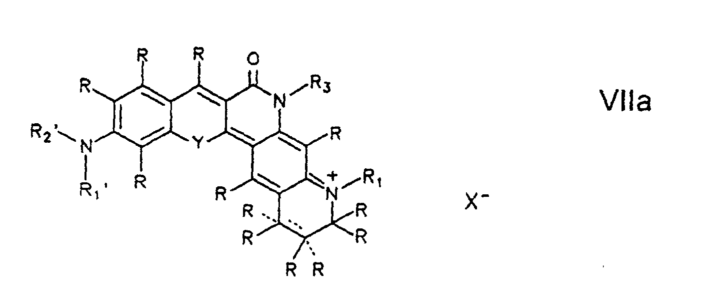 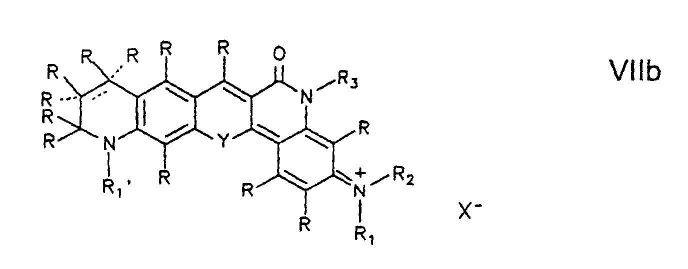 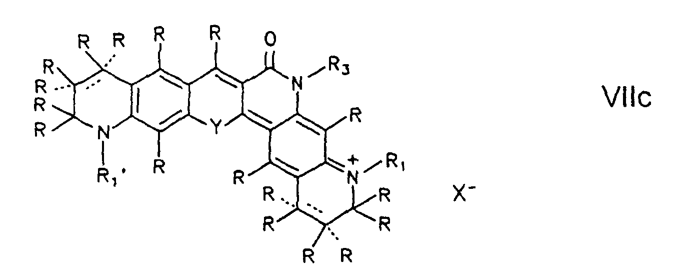 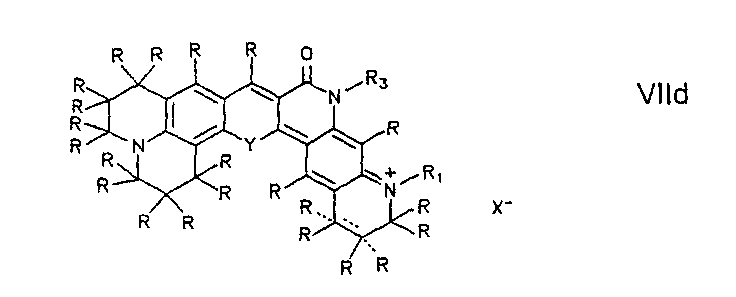 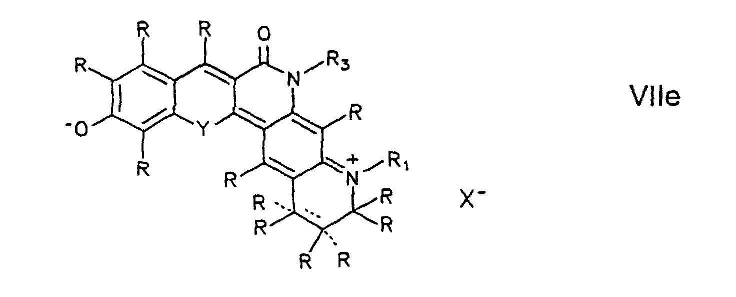 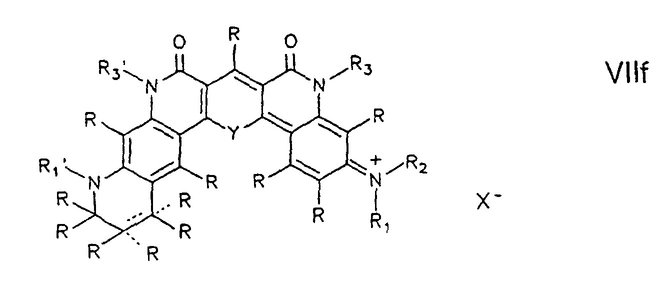 wobei die gestrichelten Linien gegebenenfalls Doppelbindungen bedeuten, bei deren Vorhandensein die über eine gestrichelte Linie gebundenen Reste R fehlen,
X, Y, R₁, R₂, R₃, R₁', R₂' und R₃' wie oben definiert sind und R jeweils unabhängig wie R₄ oben definiert ist.

Konkrete Beispiele für erfindungsgemäße Verbindungen sind in der folgenden Tabelle 1 dargestellt.

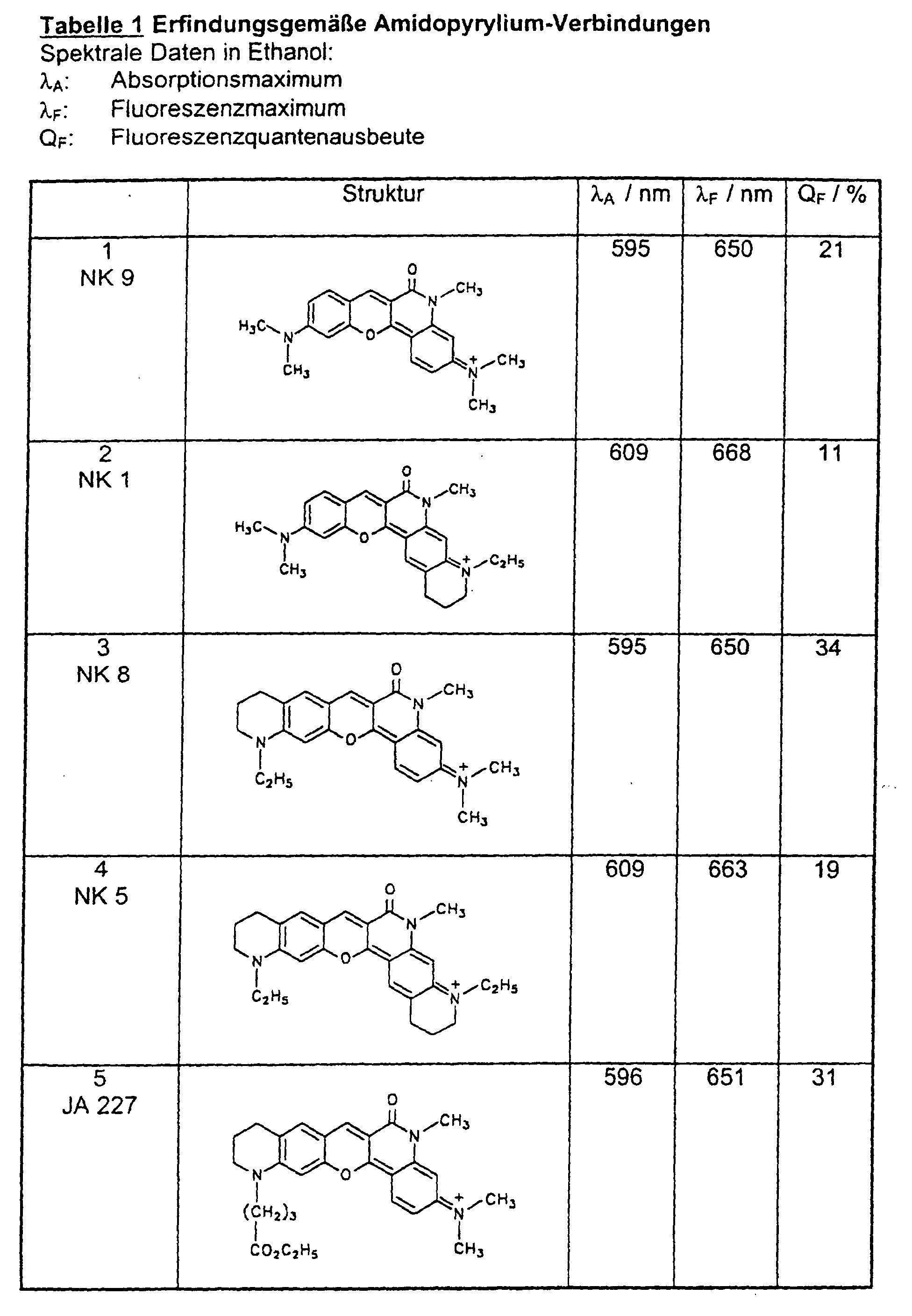

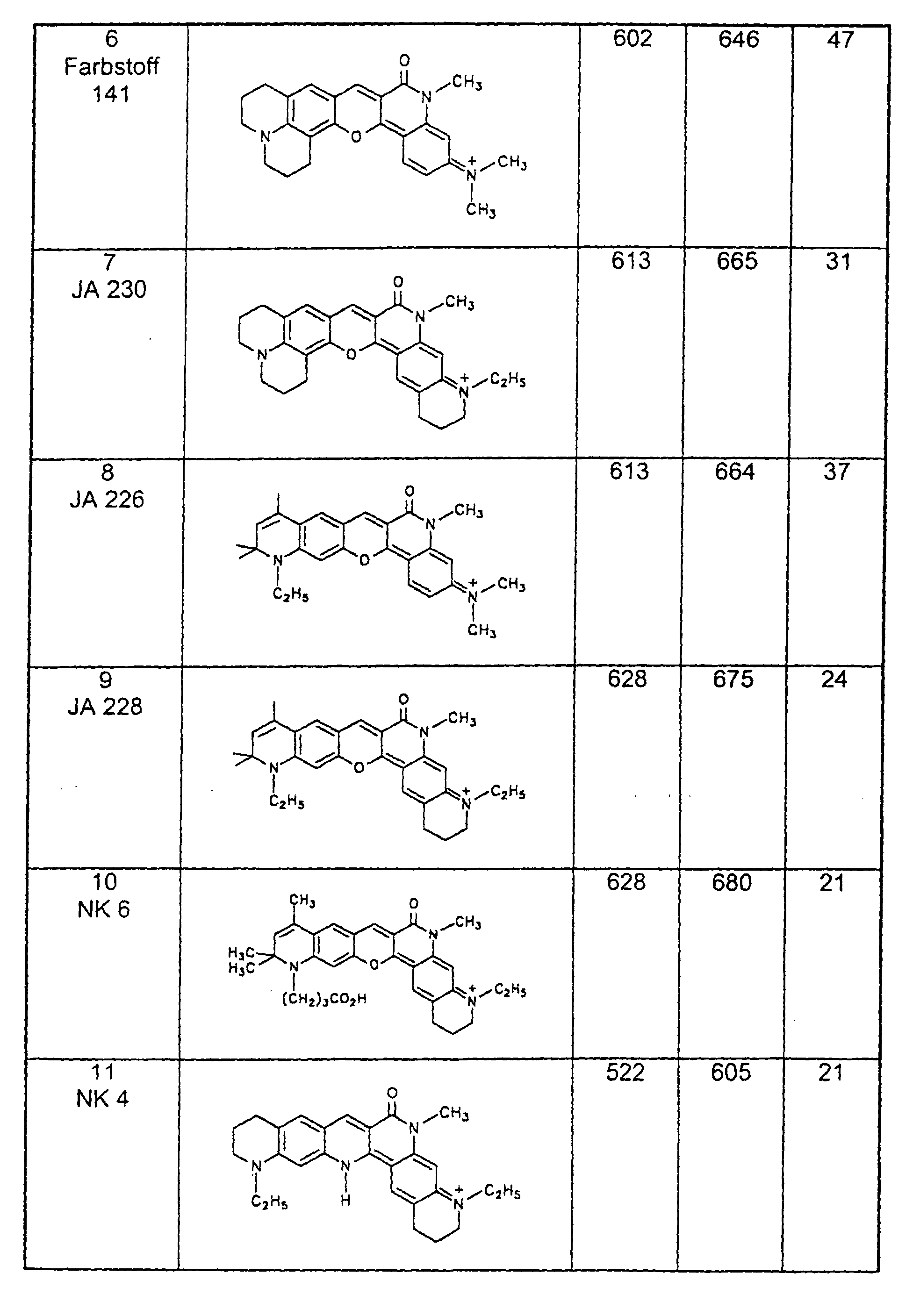

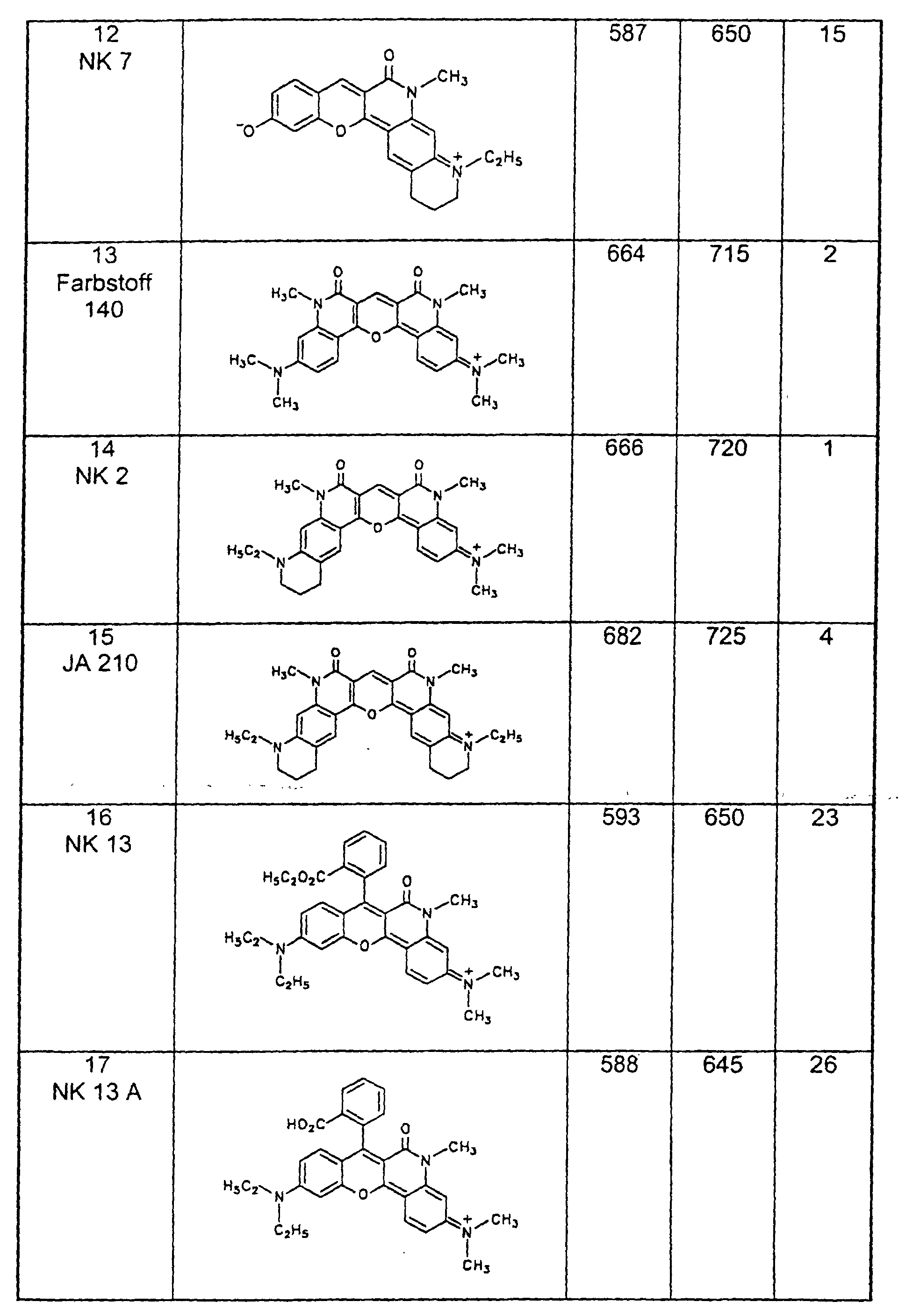

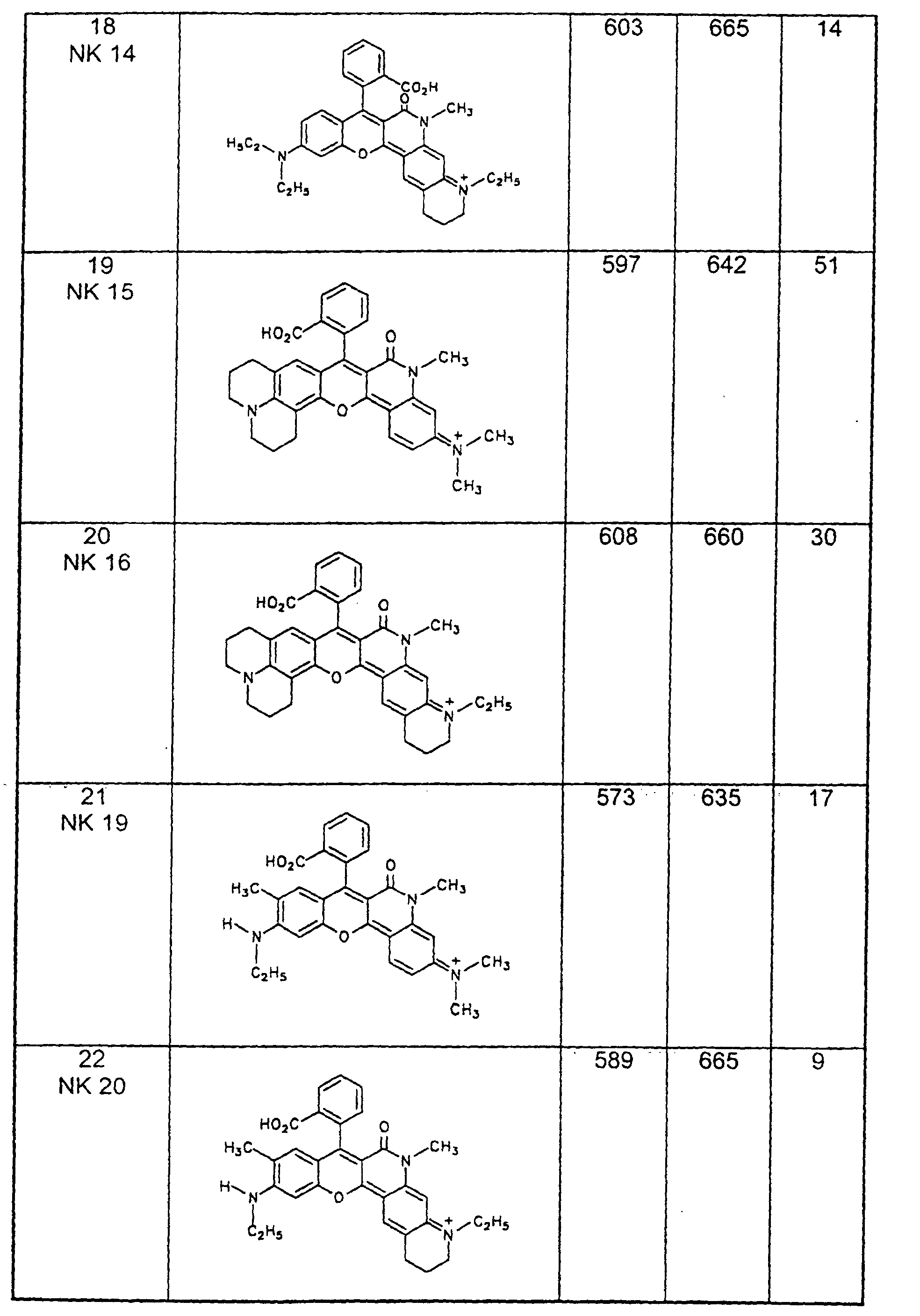

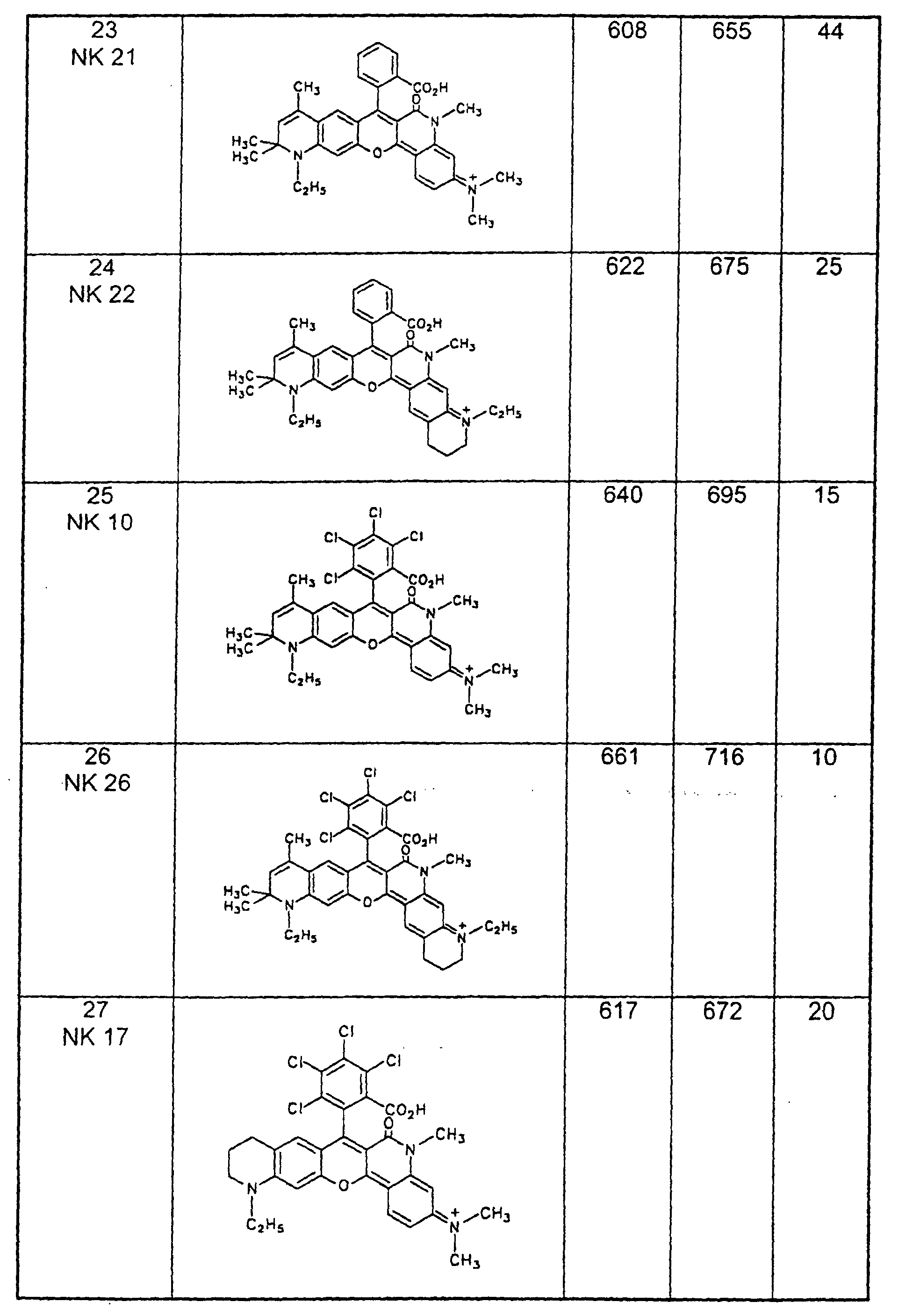

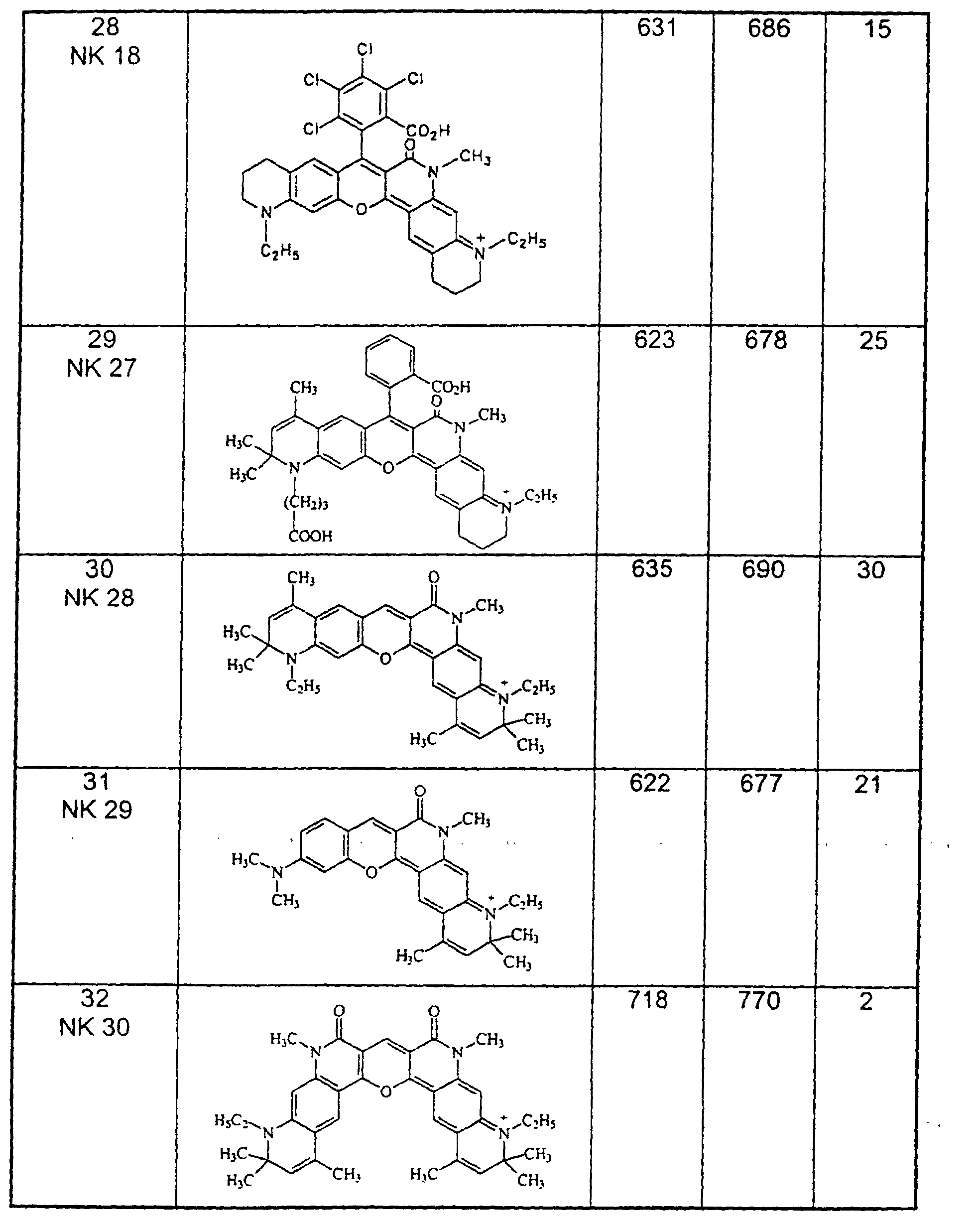

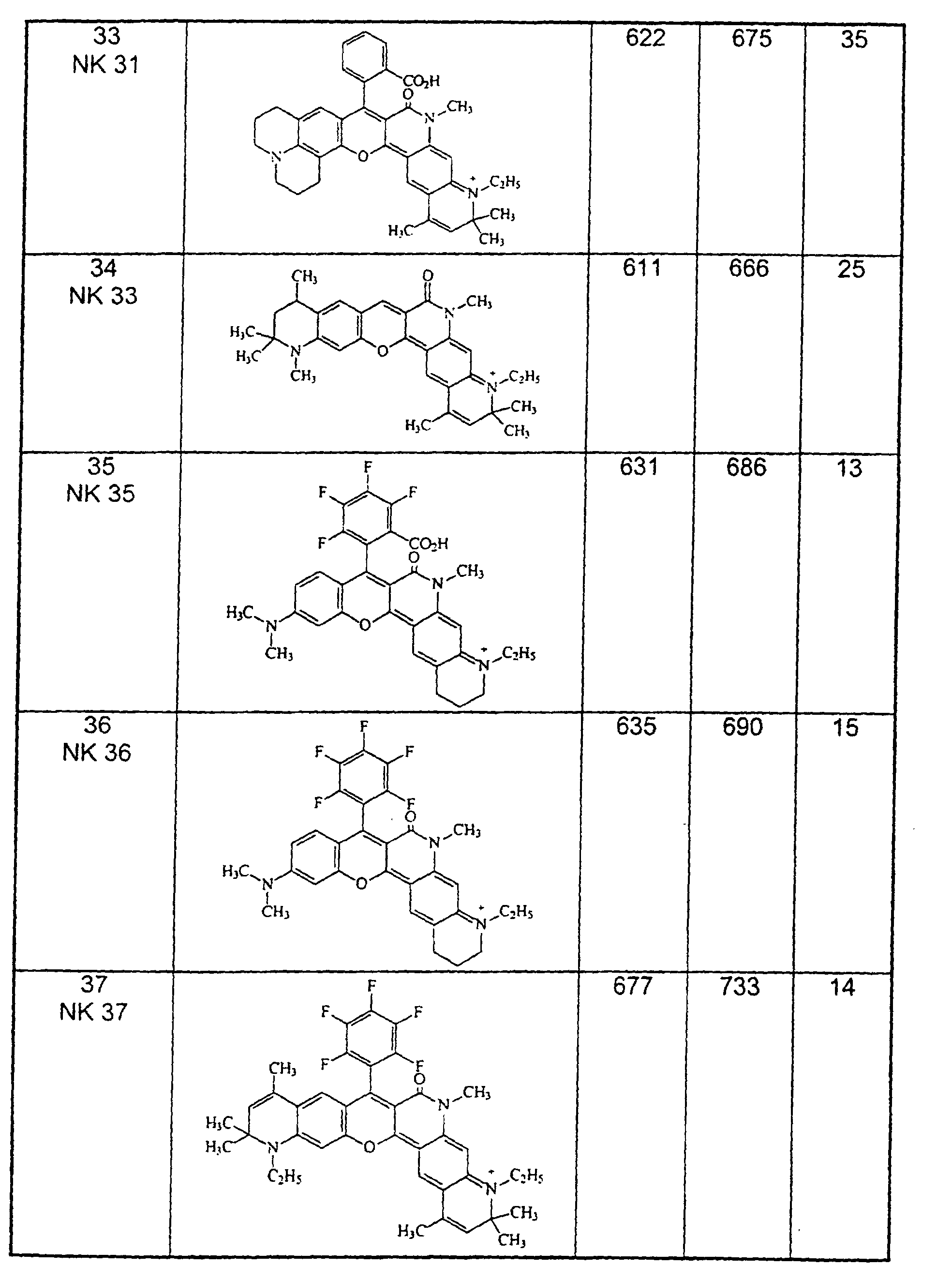

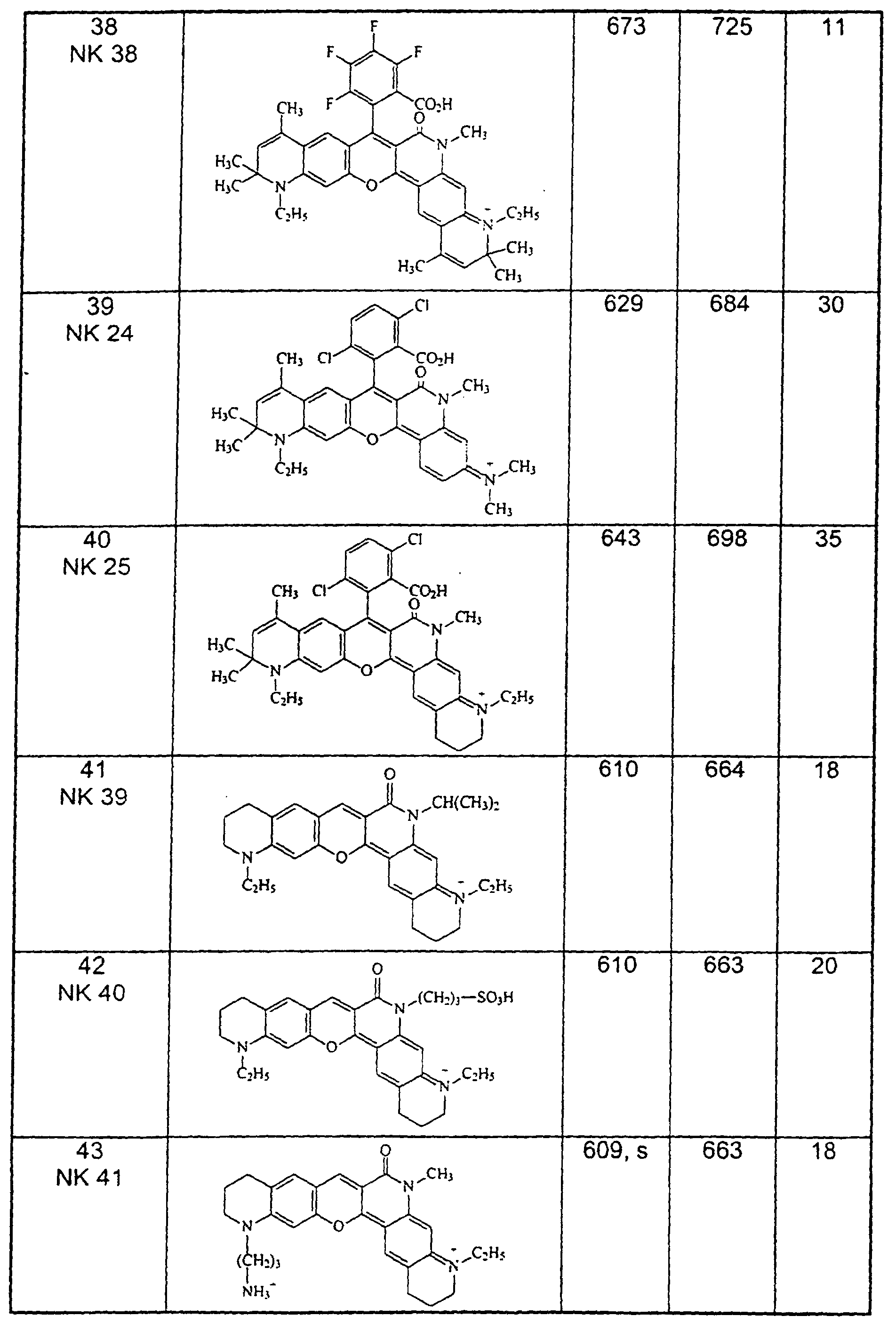

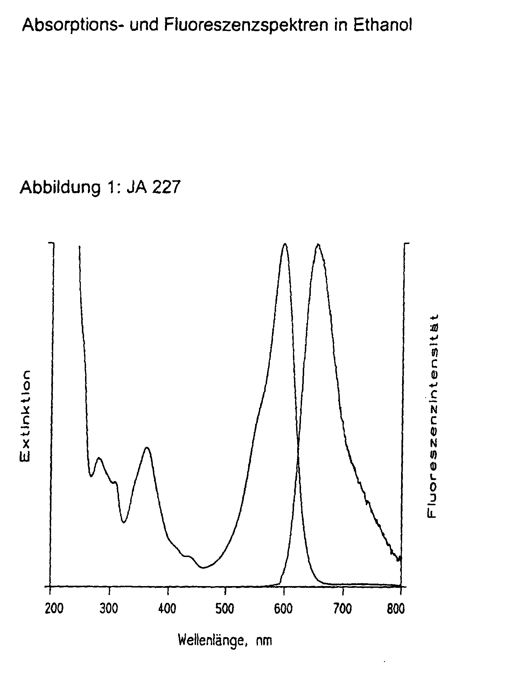

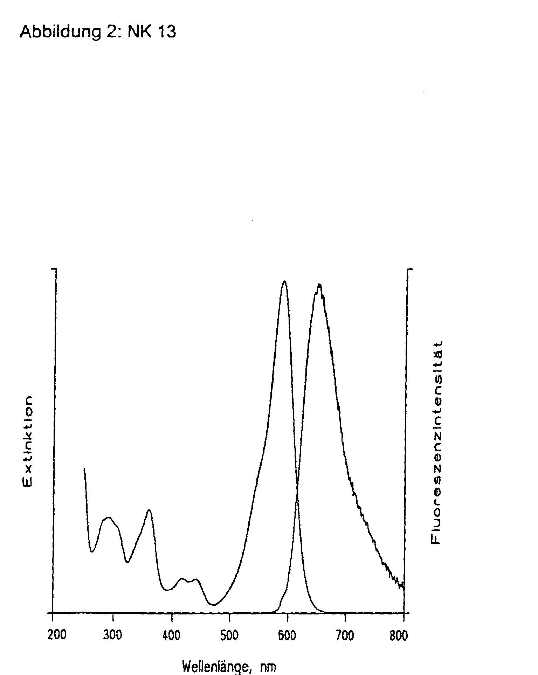

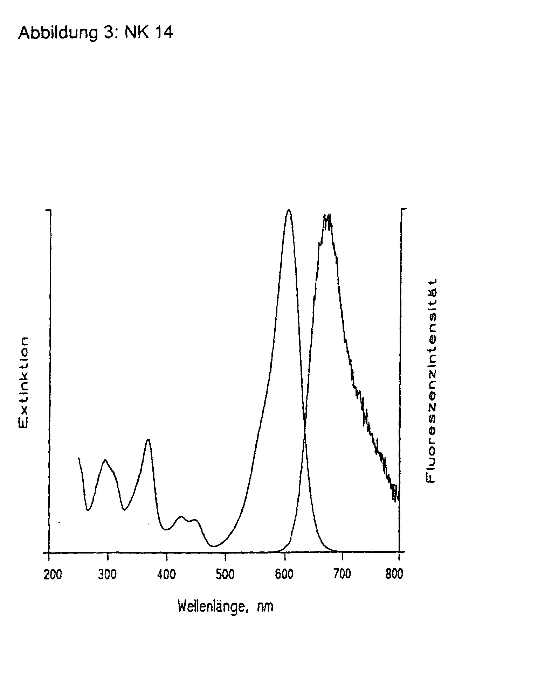

Die Erfindung wird durch die nachfolgenden Beispiele näher erläutert. Die Abbildungen 1, 2 und 3 zeigen die Absorptions- und Fluoreszenzspektren der erfindungsgemäßen Verbindungen JA 227 (5), NK 13 (16) bzw. NK 14 (18).

### Beispiele

### Herstellung der Amidopyrylium-Verbindungen

### A. Farbstoffe mit R₅ = H

Die Synthese der Vorprodukte erfolgt analog zur Synthesevorschrift von Hamisch und Brack (Liebigs Ann. Chem. 740 (1970), 164 - 168). Die Farbstoffsynthesen werden bei einer auf 100 °C verringerten Reaktionstemperatur durchgeführt. Sie werden exemplarisch anhand der Strukturen 5 (JA 227) und 15 (JA 210) beschrieben. Die Darstellung der Edukte ist im nachfolgenden Beispiel enthalten oder literaturbekannt.

### Verbindung JA 210

### 1. Stufe:

### 9-Ethyl-4-hydroxy-6,7,8,9-tetrahydro-1H-pyrido[2,3-g]chinol-2-on

3,5 g 7-Amino-1-ethyl-1,2,3,4-tetrahydrochinolin und 3,7 g Malonsäurediethylester werden auf 180 - 190°C erhitzt. Über eine Kolonne (Länge: 10 cm; Durchmesser: 0,5 cm) wird solange Ethanol abdestilliert, bis sich im Kolben ein Feststoff gebildet hat Der Feststoff wird in 30 ml Aceton verrührt, abgesaugt und der Niederschlag mit Methanol gewaschen. Der Niederschlag wird über Phosphorpentoxid getrocknet.
Ausbeute:2,0 g
¹H-NMR-Daten in CDCl₃:
δ 1,1 (T, 3H, -CH₃): 1,8 (M, 2H, -CH₂-); 2,7 (T, 2H, Ar-CH₂-); 3,2 - 3,4 (M, 4H, 2 x N-CH₂-); 5,4 (S, 1H, =CH-); 6,4 (S, 1H, ArH); 7,3 (S, 1H, ArH); 10,5 (S, 1H, - NH); 10,6 (S, 1H, -OH)

### 2. Stufe:

### 9-Ethyl-4-methoxy-1-methyl-6,7,8,9-tetrahydro-pyrido[2,3-g]chinol-2-on

2 g (8,2 mmol) 9-Ethyl-4-hydroxy-6,7,8,9-tetrahydro-1H-pyrido[2,3-g]chinol-2-on werden in 25 ml Dimethylformamid suspendiert und mit 6,7 g (0.12 mol) Kaliumhydroxid versetzt. Dazu tropft man bei max. 60 °C 8,6 g (0,07 mol) Dimethylsulfat (Kühlung mit Eis/Kochsalzbad). Die Suspension wird in 200 ml Wasser ausgetragen. Es bildet sich ein gut filtrierbarer Niederschlag, der abgesaugt und getrocknet wird.
Ausbeute: 1.8 g
Smp.: 208 °C unter Zersetzung
¹H-NMR-Daten in CDCl₃:
δ 1,2 (T, 3H, -CH₃); 1,9 (M, 2H, -CH₂-); 2,8 (T, 2H, Ar-CH₂-); 3,2 - 3,4 (M, 4H, 2 x N-CH₂-); 3.6 (S, 3H, -CH₃); 3,8 (S, 3H, -OCH₃); 5,8 (S, 1H, =CH-); 6,3 (S, 1H, ArH); 7,4 (S, 1H, ArH)

### 3. Stufe:

### 9-Ethyl-4-hydroxy-1-methyl-6,7,8,9-tetrahydro-pyrido[2,3-g]chinol-2-on

0,5 g (1,8 mmol) 9-Ethyl-4-methoxy-1-methyl-6,7,8,9-tetrahydro-pyrido[2,3-g]chinol-2-on werden in 5 ml 10 %-iger Salzsäure 2 h zum Rückfluß erhitzt. Die Suspension wird mit 10 %-iger Natriumacetatlösung auf pH 5 abgestumpft. Der Niederschlag wird abgesaugt und im Exsikkator getrocknet.
¹H-NMR-Daten in d₆-DMSO:
δ 1,1 (T, 3H, -CH₃); 1,9 (M, 2H, -CH₂-); 2,7 (T, 2H, Ar-CH₂-); 3,3 - 3,5 (M, 7H, N-CH₃, 2 x N-CH₂-); 5,5 (S, 1H, =CH-); 6,3 (S, 1H, ArH); 7,4 (S, 1H, ArH); 10,8 (S, 1H, -OH)

### 4. Stufe:

### 4-Chlor-9-ethyl-1-methyl-6,7,8,9-tetrahydro-pyrido[2,3-g]chinol-2-on-3-carbaldehyd

Zu 3 ml Dimethylformamid tropft man bei 50 - 55 °C 0.4 g Phosphoroxychlorid. Die Lösung wird noch 1 h bei 50 °C verrührt. Anschließend fügt man bei derselben Temperatur unter Rühren 0,5 g (1,8 mmol) 9-Ethyl-4-methoxy-1-methyl-6,7,8,9-tetrahydro-pyrido[2,3-g]chinol-2-on gelöst in 6 ml Dimethylformamid hinzu. Man rührt noch 5 h bei 80 - 90 °C. Die intensiv gelb gefärbte Lösung wird auf 50 ml Wasser und 10 g Eis ausgetragen und 12 h bei Raumtemperatur verrührt. Der hellgelbe Niederschlag wird abfiltriert und getrocknet.
Absorptions- und Fluoreszenzmaximum in Ethanol: λ_{A} = 439 nm; λ_{F} = 494 nm
¹H-NMR-Daten in CDCl₃:
δ 1,3 (T, 3H, -CH₃); 2,0 (M, 2H, -CH₂-); 2,8 (T, 2H, Ar-CH₂-); 3,5 (M, 4H, 2 x N-CH₂-); 3,6 (S, 3H, N-CH₃); 6,1 (S, 1H, ArH); 7,7 (S, 1H, ArH); 10,4 (S, 1H, - CH=O)

### 5. Stufe:

### JA 210

0,18 g (0,69 mmol) 9-Ethyl-4-hydroxy-1-methyl-6,7,8,9-tetrahydro-pyrido[2,3-g]chinol-2-on und 0,2 g (0,69 mmol) 4-Chlor-9-ethyl-1-methyl-6,7,8,9-tetrahydro-pyrido[2,3-g]chinol-2-on-3-carbaldehyd werden in 20 ml Eisessig gelöst und 20 min in einem 100 °C warmen Ölbad erhitzt. Die Lösung wird in 100 ml Wasser gegossen und der Niederschlag abfiltriert. Der Farbstoff wird chromatographisch gereinigt.
¹H-NMR-Daten in DMSO-d₆:
δ 1,3 (T, 6H, -CH₃); 1,9 (S, 4H, -CH₂-); 2,7 (S, 4H, Ar-CH₂-); 3,4 (S, 6H, N-CH₃); 3,6 (M, 8H, 2 x N-CH₂-); 6,2 (S, 2H, ArH); 7,6 (S, 2H, ArH); 8,5 (S, 1 H, -CH=)

### Verbindung JA 227

1,2 g (4,5 mmol) 4-(7-Hydroxy-1,2,3,4-tetrahydrochinol-1-yl)-buttersäureethylester und 1,2 g (4,5 mmol) 4-Chlor-7-dimethylamino-1-methyl-chinol-2-on-3-carbaldehyd werden in 50 ml Eisessig gelöst und 5 min in einem 100 °C warmen Ölbad erhitzt. Die Lösung wird in 500 ml 15 %-iger Natriumchloridlösung getropft und der Niederschlag abfiltriert. Der Farbstoff wird chromatographisch gereinigt.

### B. Farbstoffe mit R₅ = (substituierter) Phenyl-Ring

Eine bevorzugte Darstellung der Verbindungen wird exemplarisch anhand der Strukturen 18 (NK 14), 20 (NK 16) und 23 (NK 21) vorgestellt. Die Eduktsynthesen werden, soweit diese nicht literaturbekannt sind, analog zu den in Teil A beschriebenen Beispielen durchgeführt. Die Synthese der Benzoyl-benzoesäure-Derivate erfolgt analog zur literaturbekannten Darstellung des 6-(2-Carboxy-3,4,5,6-tetrachlorbenzoyl)-1-ethyl-7-hydroxy-2,2,4-trimethyl-1,2-dihydrochinolins.

### Verbindung NK 14

1,2 g (3,9 mmol) 2-(4-Dimethylamino-2-hydroxy)-benzoyl-benzoesäure und 1,0 g (3,9 mmol) 9-Ethyl-4-hydroxy-1-methyl-6,7,8,9-tetrahydro-pyrido[2,3-g]chinol-2-on werden in 40 ml 1,1,2,2-Tetrachlorethan bis zur vollständigen Auflösung der Substanzen zum Rückfluß erhitzt. Nun werden insgesamt 5 g Phosphorpentoxid portionsweise zugegeben und die Reaktionsmischung weitere drei Stunden am Rückfluß gekocht. Nach dem Erkalten wird die Mischung mit je 50 ml Wasser und Chloroform aus dem Kolben gelöst und nach dem Abtrennen der organischen Phase wird die Wasserphase noch dreimal mit je 50 ml Chloroform extrahiert. Die vereinigten organischen Phasen werden zur Trockene einrotiert und der Farbstoff anschließend säulenchromatographisch gereinigt.
Die Farbstofffraktionen werden einrotiert, der Rückstand in 50 ml Ethanol aufgelöst und nach der Zugabe von 10 ml Perchlorsäure (60 %-ig) durch Zutropfen von Wasser ausgefällt. Nach dem Absaugen wird das Farbstoffperchlorat sorgfältig mit Wasser gewaschen und im Exsikkator über Phosphorpentoxid getrocknet.
Ausbeute: 700 mg

### Verbindung NK 16

0,75 g (2,22 mmol) 9-(2-Carboxybenzoyl)-8-hydroxy-2,3,6,7-tetrahydro-1 H,5H-benzo[ij]chinolizin und 0,57 g (2,22 mmol) 9-Ethyl-4-hydroxy-1-methyl-6,7,8,9-tetrahydro-pyrido[2,3-g]chinol-2-on werden in 40 ml 1,1,2,2-Tetrachlorethan bis zur vollständigen Auflösung der Substanzen zum Rückfluß erhitzt. Nun werden insgesamt 5 g Phosphorpentoxid portionsweise zugegeben und die Reaktionsmischung weitere drei Stunden am Rückfluß gekocht. Nach dem Erkalten wird die Mischung mit je 50 ml Wasser und Chloroform aus dem Kolben gelöst und nach dem Abtrennen der organischen Phase wird die Wasserphase noch dreimal mit je 50 ml Chloroform extrahiert. Die vereinigten organischen Phasen werden zur Trockene einrotiert und der Farbstoff anschließend säulenchromatographisch gereinigt.
Die Farbstofffraktionen werden einrotiert, der Rückstand in 50 ml Ethanol aufgelöst und nach der Zugabe von 10 ml Perchlorsäure (60 %-ig) durch Zutropfen von Wasser ausgefällt. Nach dem Absaugen wird das Farbstoffperchlorat sorgfältig mit Wasser gewaschen und im Exsikkator über Phosphorpentoxid getrocknet.
Ausbeute: 160 mg

### Verbindung NK 21

1,13 g (3,1 mmol) 6-(2-Carboxybenzoyl)-1-ethyl-7-hydroxy-2,2,4-trimethyl-1,2-dihydro-chinolin und 0,68 g (3,1 mmol) 7-Dimethylamino-4-hydroxy-1-methyl-chinol-2-on werden in 60 ml 1,1,2,2-Tetrachlorethan bis zur vollständigen Auflösung der Substanzen zum Rückfluß erhitzt. Nun werden insgesamt 4 g Phosphorpentoxid portionsweise zugegeben und die Reaktionsmischung weitere drei Stunden am Rückfluß gekocht. Nach dem Erkalten wird die Mischung mit je 50 ml Wasser und Chloroform aus dem Kolben gelöst und nach dem Abtrennen der organischen Phase wird die Wasserphase noch dreimal mit je 50 ml Chloroform extrahiert. Die vereinigten organischen Phasen werden zur Trockene einrotiert und der Farbstoff anschließend säulenchromatographisch gereinigt.
Die Farbstofffraktion wird einrotiert, der Rückstand in 25 ml Ethanol aufgelöst und nach der Zugabe von 8 ml Perchlorsäure (60 %-ig) durch Zutropfen von Wasser ausgefällt. Nach dem Absaugen wird das Farbstoffperchlorat sorgfältig mit Wasser gewaschen und im Exsikkator über Phosphorpentoxid getrocknet.
Ausbeute: 50 mg

### C. Beispiele zur Konjugatbildung

### NK 41-Maleinimid

100 mg NK 41 (0.2 mmol) werden in 10 ml getrocknetem DMSO gelöst und mit 100 mg (1 mmol) Maleinsäureanhydrid versetzt. Die Lösung wird bei Raumtemperatur ca. 24 h verrührt. Man tropft 50 ml einer 10 %igen wäßrigen Natriumperchloratlösung hinzu und filtriert den ausgefallenen Feststoff ab. Der Feststoff wird mit 25 mg Natriumacetat in 5 ml Essigsäureanhydrid suspendiert und für 30 min auf etwa 80 °C erhitzt. Nach dem Abkühlen tropft man 30 ml der 10 %igen Natriumperchloratlösung hinzu, filtriert und trocknet den Feststoff.

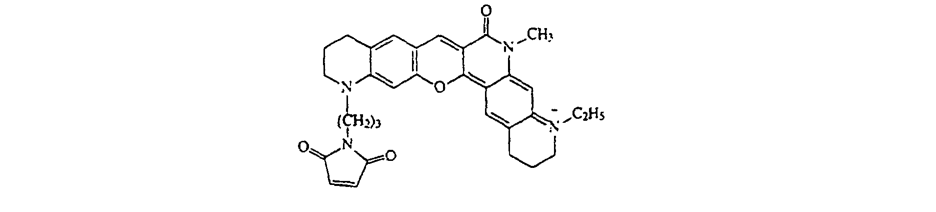

### NK 41-Maleinimid-Cystein-Konjugat

70 mg (0.16 mmol) NK 41-Maleinimid wird in 20 ml Ethanol gelöst und portionsweise mit 22 mg (0.16 mmol) Cystein versetzt. Man verrührt bei Raumtemperatur und tropft nach 30 min etwa 50 ml einer 10 %igen Natriumperchloratlösung hinzu. Der ausgefallene Feststoff wird abfiltriert und getrocknet.

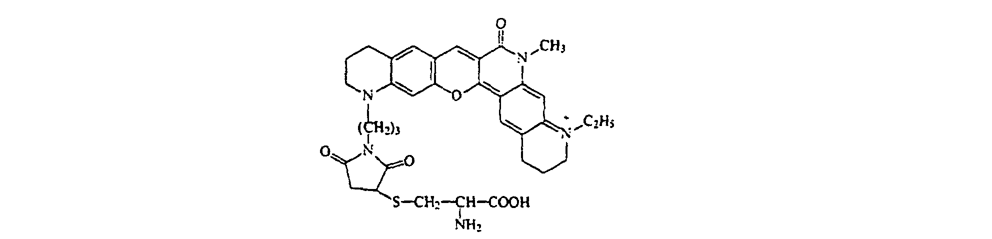

### NK 27-Aktivester

50 mg (0.1 mmol) NK 27 werden mit 0.2 mmol N-Hydroxysuccinimid und 0.2 mmol Dicyclohexylcarbodiimid in 20 ml Acetonitril gelöst. Man läßt 5 h bei Raumtemperatur rühren und rotiert das Produktgemisch ein. Die Reinigung erfolgt chromatographisch.

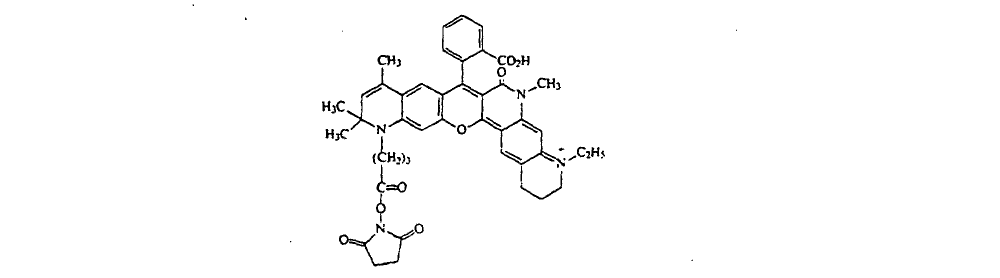

### NK 27-dUTP-Konjugat

10 mol 5-(3-Aminoallyl)-dUTP werden in 0.5 ml 0.1 M Natriumborat-Puffer (pH 8) gelöst und mit einer Lösung aus 5 mol NK 27-Aktivester in 1 ml aminfreiem Dimethylformamid versetzt. Die Lösung wird 15 h bei Raumtemperatur gerührt. Das Lösungsmittel wird im Vakuum abdestilliert und der Rückstand chromatographisch gereinigt.

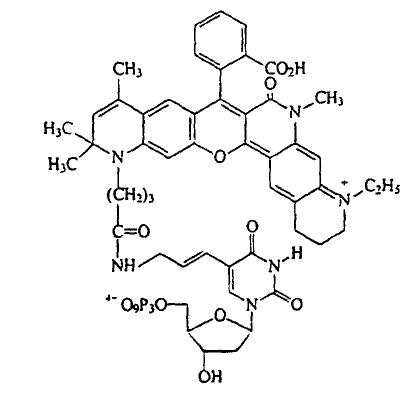

## Patentansprüche

1. Verwendung von Verbindungen der allgemeinen Formel I 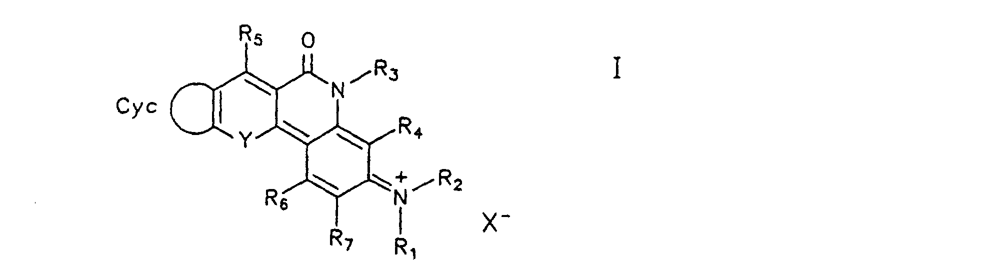 als Markierungsgruppen in einem Verfahren zum Nachweis eines Analyten, wobei
Y Sauerstoff oder N-R₈ bedeutet,
R₁, R₂, R₃ und R₈ bei jedem Vorkommen unabhängig Wasserstoff, eine Phenyl, eine Phenylalkylgruppe mit 1-3 C-Atomen in der Alkylkette, eine Polyether- oder eine Kohlenwasserstoffgruppe mit bis zu 20 C-Atomen, vorzugsweise mit bis zu 6 C-Atomen, bedeuten, die gegebenenfalls einen oder mehrere Substituenten, vorzugsweise ausgewählt aus Halogenen, Hydroxy-, Amino-, Sulfo-, Carboxy-, Carbonyl-, Alkoxy- oder/und Alkoxycarbonylgruppen. enthalten kann, oder einer oder mehrere der Reste R₁, R₂, R₃ und R₈ mit einem benachbarten Substituenten ein Ringsystem bilden,
R₄, R₅, R₆ und R₇ jeweils unabhängig Wasserstoff, Halogen, Phenyl, eine Hydroxy-, Amino-, Sulfo- oder Carboxygruppe oder eine Kohlenwasserstoffgruppe mit bis zu 15 C-Atomen bedeuten, wobei die Kohlenwasserstoffgruppen Alkyl-, Alkenyl-, Alkinyl-, Cycloalkyl-, Aryl- oder/und Heteroarylreste umfassen und gegebenenfalls jeweils einen oder mehrere Substituenten, vorzugsweise ausgewählt aus Halogenen, Hydroxy-, Amino-, Sulfo-, Carboxy-, Aldehyd-, Alkoxy- oder/und Alkoxycarbonylgruppen, enthalten können,
wobei einer oder mehrere der Reste R₄, R₆ und R₇ mit einem benachbarten Substituenten ein Ringsystem bilden können,
Cyc einen organischen Rest bedeutet, der ein Ringsystem, ausgewählt aus aromatischen, hetereoaromatischen, chinoiden oder/und cycloaliphatischen Ringen umfaßt, das gegebenenfalls einen oder mehrere Substituenten, vorzugsweise ausgewählt aus Halogenen, Amino-, Hydroxy-, Sulfo-, Carboxy-, Aldehyd-, Alkoxy- oder/und Alkoxycarbonylgruppen, enthalten kann, und
X gegebenenfalls zum Ladungsausgleich vorhandene Anionen bedeutet.

2. Verwendung nach Anspruch 1,
**dadurch gekennzeichnet,**
**daß** die Verbindung I kovalent an einen für den nachzuweisenden Analyten spezifischen Rezeptor gekoppelt wird.

3. Verwendung nach Anspruch 1 oder 2,
**dadurch gekennzeichnet,**
**daß** das Nachweisverfahren aus Nukleinsäure-Hybridisierungsverfahren und immunchemischen Verfahren ausgewählt wird.

4. Verbindung der allgemeinen Formel I 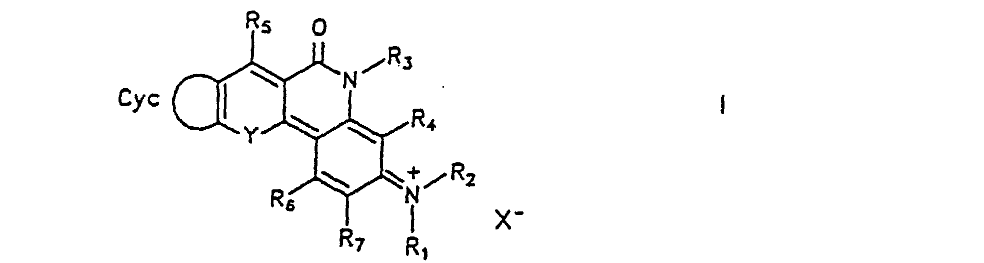 wobei
Y, R₁-R₇ und Cyc die in Anspruch 1 angegebenen Bedeutungen besitzten,
X gegebenenfalls zum Ladungsausgleich vorhandene Anionen bedeutet, mit der Maßgabe, daß wenn Y Sauerstoff, R₁, R₂ und R₃ Methyl und R₄, R₅, R₆ und R₇ Wasserstoff sind,
Cyc keine Struktur der Formeln II, III oder IIIa 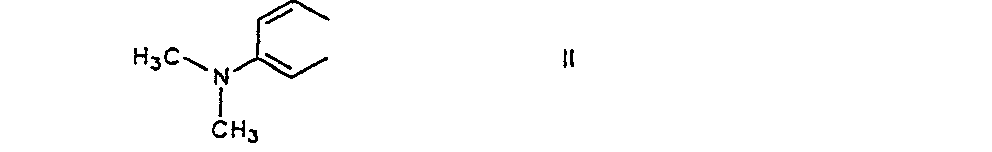 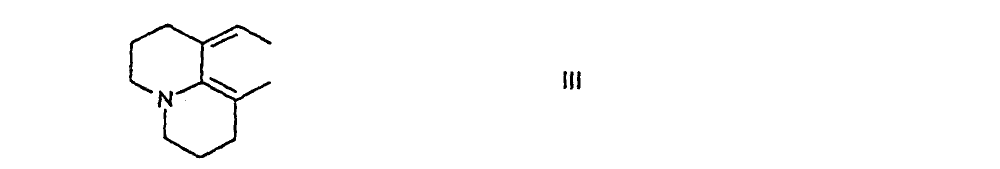 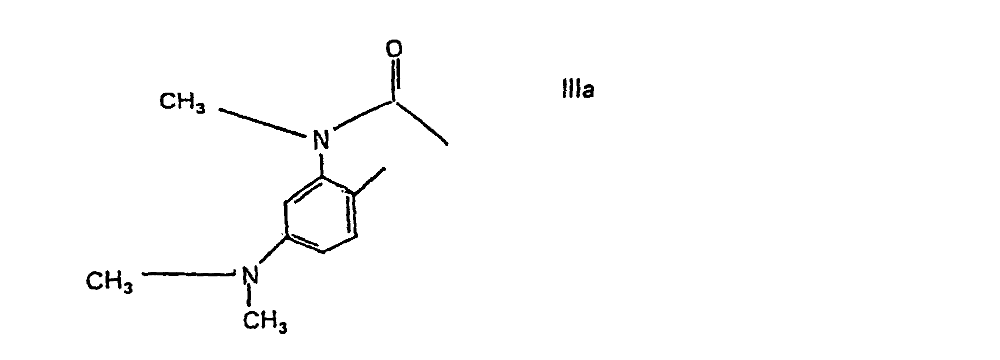
aufweist.

5. Verbindungen nach Anspruch 4,
**dadurch gekennzeichnet,**
**daß** R₁ mit R₇ oder/und R₂ mit R₄ verbrückt sind und ein Ringsystem, insbesondere einen 5- oder 6-gliedrigen Ring, bilden.

6. Verbindungen der Formel I nach Anspruch 4 oder 5, worin Cyc eine Struktur der Formeln IV, V oder VI 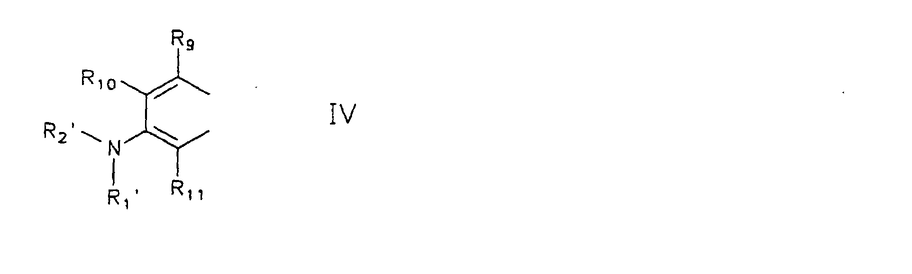 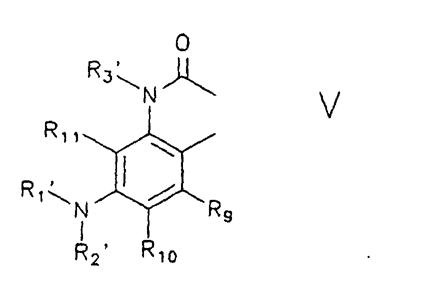 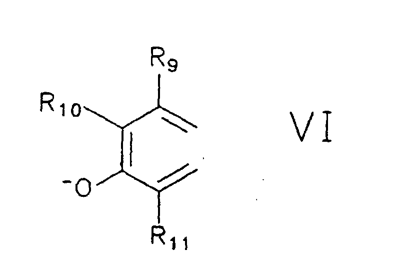 aufweist, wobei
R₁', R₂' und R₃' wie R₁, R₂ und R₃ in Anspruch 1 definiert sind, und R₉-R₁₁ wie R₄-R₇ in Anspruch 1 definiert sind.

7. Verbindungen nach Anspruch 6,
**dadurch gekennzeichnet,**
**daß** R₁' mit R₁₁ oder/und R₂' mit R₁₀ verbrückt sind und ein Ringsystem, insbesondere einen 5- oder 6-gliedrigen Ring bilden.

8. Verbindungen nach einem der Ansprüche 4 bis 7, die einer der allgemeinen Formeln VIIa-f entsprechen 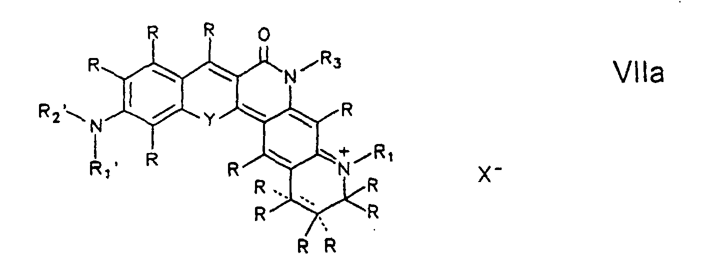 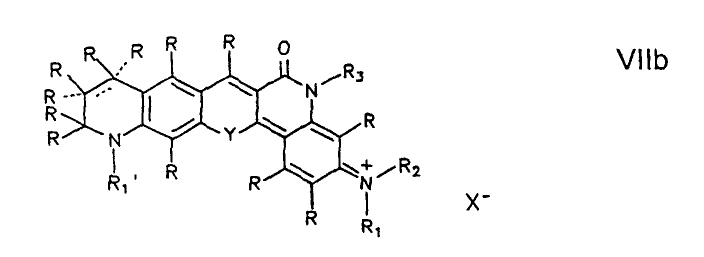 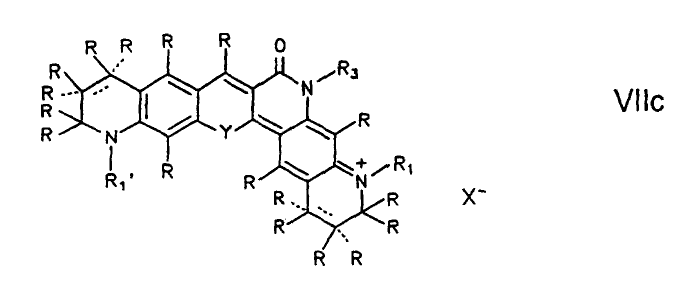 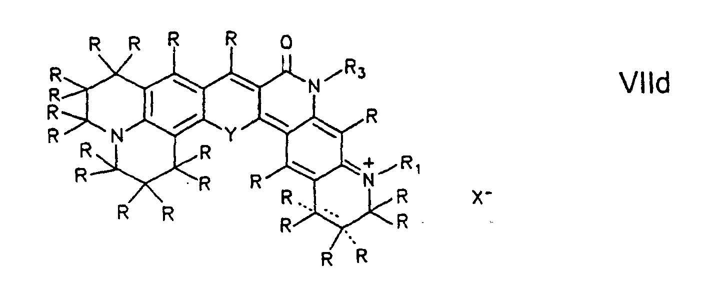 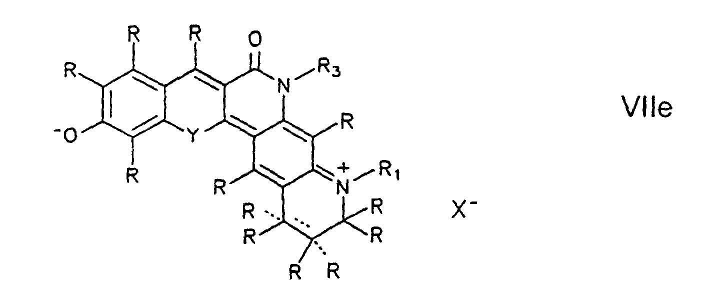 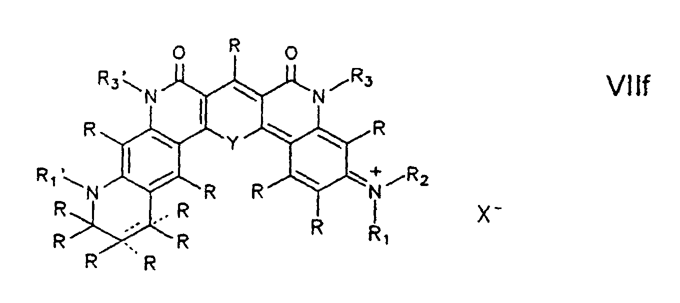 wobei
die gestrichelten Linien gegebenenfalls Doppelbindungen bedeuten und bei Vorhandensein der Doppelbindungen die über eine gestrichelte Linie gebundenen Reste R fehlen,
X, Y, R₁, R₂ und R₃ wie in Anspruch 4 und 5 definiert sind,
R₁', R₂' und R₃' wie in Anspruch 6 und 7 definiert sind, und
R jeweils unabhängig wie R₄ in Anspruch 4 definiert ist.

9. Verbindungen nach einem der Ansprüche 4 bis 8,
**dadurch gekennzeichnet,**
**daß** Y Sauerstoff ist.

10. Verbindungen nach einem der Ansprüche 4 bis 9,
**dadurch gekennzeichnet,**
**daß** R₅ ein aromatisches, gegebenenfalls substituiertes Ringsystem umfaßt.

11. Verbindungen nach einem der Ansprüche 4 bis 10,
**dadurch gekennzeichnet,**
**daß** sie eine zur kovalenten Kopplung fähige Gruppe aufweisen.

12. Verbindungen nach Anspruch 11,
**dadurch gekennzeichnet,**
**daß** die Kopplungsgruppe -COOH, -NH₂, -OH oder/und -SH ist.

13. Verbindungen nach Anspruch 11 oder 12,
**dadurch gekennzeichnet,**
**daß** sie über Kopplungsgruppen an einen Träger oder/und an ein Biomolekül gekoppelt sind.

14. Verbindungen nach Anspruch 13,
**dadurch gekennzeichnet,**
**daß** der Träger ausgewählt ist aus porösem Glas, lonenaustauscherharzen, Kunststoffen, Dextranen, Cellulose, Cellulosederivaten oder/und hydrophilen Polymeren.

15. Verbindungen nach Anspruch 13,
**dadurch gekennzeichnet,**
**daß** das Biomolekül ausgewählt ist aus Peptiden, Polypeptiden, Nukleotiden, Nukleosiden, Nukleinsäuren, Nukleinsäureanaloga oder/und Haptenen.

## Claims

1. The use of compounds of the general formula I 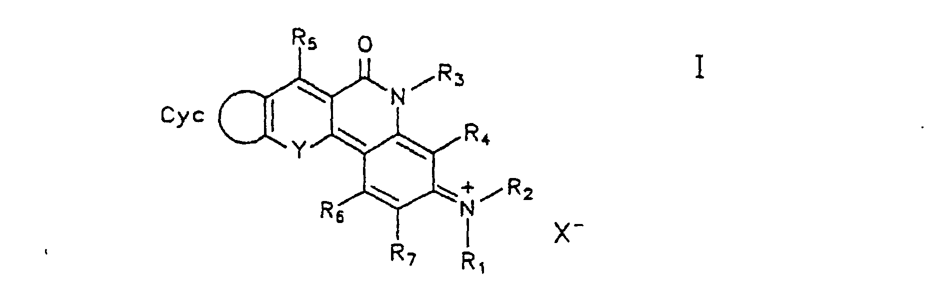 as labeling groups in a procedure for the detection of an analyte, where
Y is oxygen or N-R₈,
R₁, R₂, R₃ and R₈, on each occurrence, are independently hydrogen, a phenyl group, a phenylalkyl group having 1-3 C atoms in the alkyl chain, a polyether group or a hydrocarbon group having up to 20 C atoms, preferably having up to 6 C atoms, which can optionally contain one or more substituents, preferably selected from halogens, hydroxyl, amino, sulpho, carboxyl, carbonyl, alkoxy or/and alkoxycarbonyl groups, or one or more of the radicals R₁, R₂, R₃ and R₈ combine with an adjacent substituent to form a ring system,
R₄, R₅, R₆ and R₇ in each case independently of one another are hydrogen, halogen, phenyl, a hydroxyl, amino, sulpho or carboxyl group or a hydrocarbon group having up to 15 C atoms, where the hydrocarbon groups can comprise alkyl, alkenyl, alkynyl, cycloalkyl, aryl or/and heteroaryl radicals and can optionally in each case contain one or more substituents, preferably selected from halogens, hydroxyl, amino, sulpho, carboxyl, aldehyde, alkoxy or/and alkoxycarbonyl groups,
where one or more of the radicals R₄, R₆ and R₇ can combine with an adjacent substituent to form a ring system,
Cyc is an organic radical which comprises a ring system selected from aromatic, heteroaromatic, quinoid or/and cycloaliphatic rings, which can optionally contain one or more substituents, preferably selected from halogens, amino, hydroxyl, sulpho, carboxyl, aldehyde, alkoxy or/and alkoxycarbonyl groups, and
X is optionally anions present for charge equalization.

2. Use according to Claim 1,
**characterized in that**
the compound I is coupled covalently to a receptor specific for the analyte to be detected.

3. Use according to Claim 1 or 2,
**characterized in that**
the detection procedure is selected from nucleic acid hybridization procedures and immunochemical procedures.

4. Compound of the general formula I 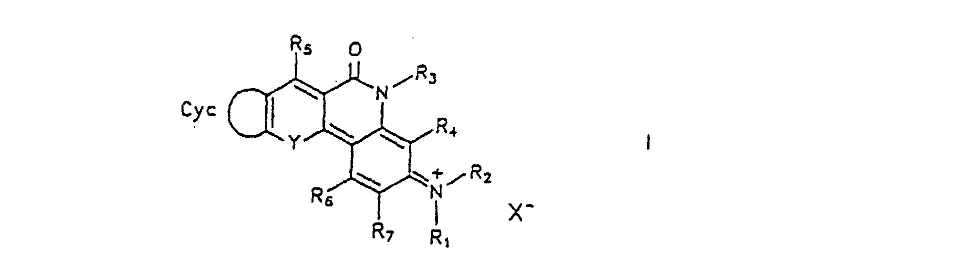 where
Y, R₁-R₇ and Cyc have the meanings indicated in Claim 1,
X is optionally anions present for charge equalization,
with the proviso that if Y is oxygen, R₁, R₂ and R₃ are methyl and R₄, R₅, R₆ and R₇ are hydrogen,
Cyc does not have a structure of the formulae II, III or IIIa

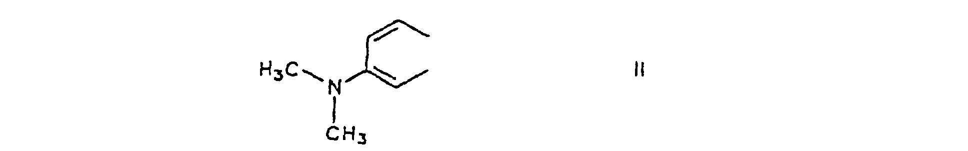

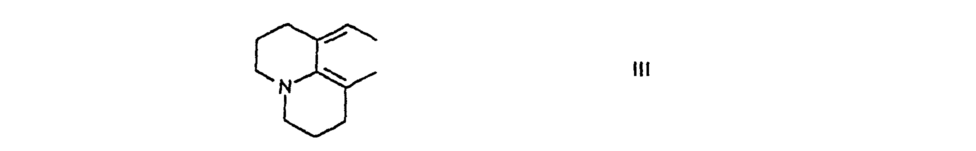

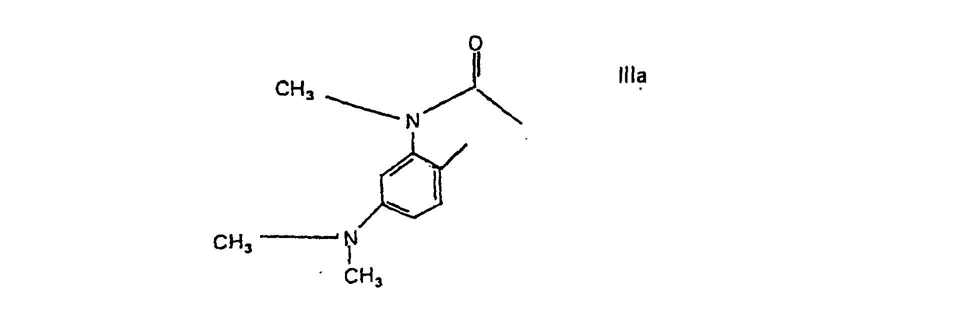

5. Compounds according to Claim 4,
**characterized in that**
R₁ is bridged with R₇ or/and R₂ with R₄ to form a ring system, in particular a 5- or 6-membered ring.

6. Compounds of the formula I according to Claim 4 or 5, in which Cyc has a structure of the formulae IV, V or VI 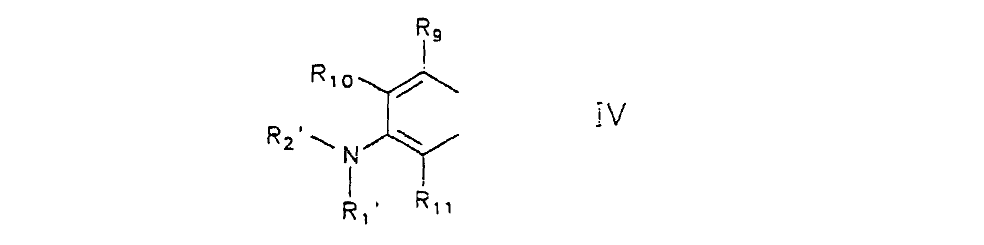 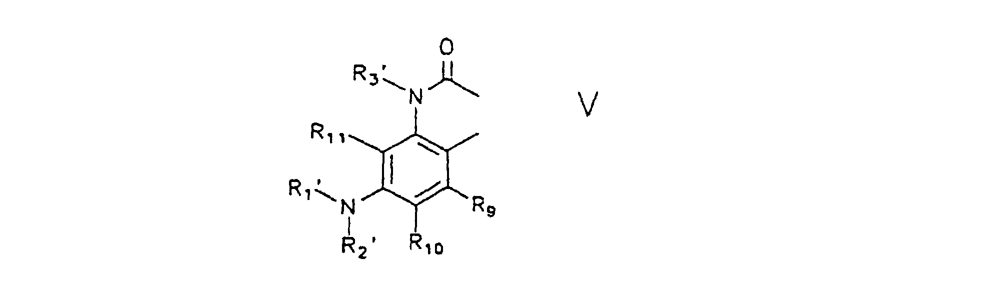 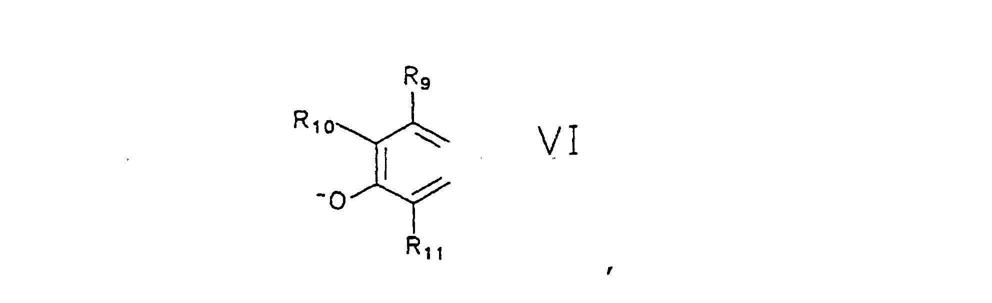 where
R₁', R₂' and R₃' are defined as R₁, R₂ and R₃ in Claim 1, and R₉-R₁₁ are defined as R₄-R₇ in Claim 1.

7. Compounds according to Claim 6,
**characterized in that**
R₁' is bridged with R₁₁ or/and R₂' with R₁₀ to form a ring system, in particular a 5- or 6-membered ring.

8. Compounds according to one of Claims 4 to 7, which corresponds to one of the general formulae VIIa to f 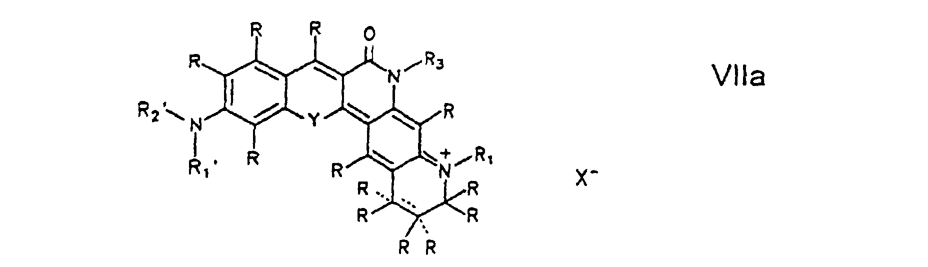 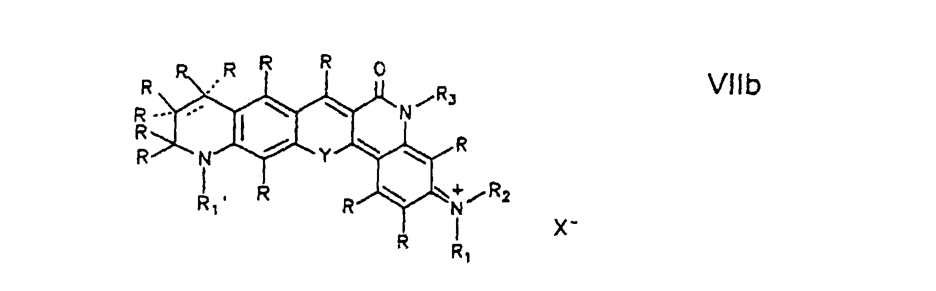 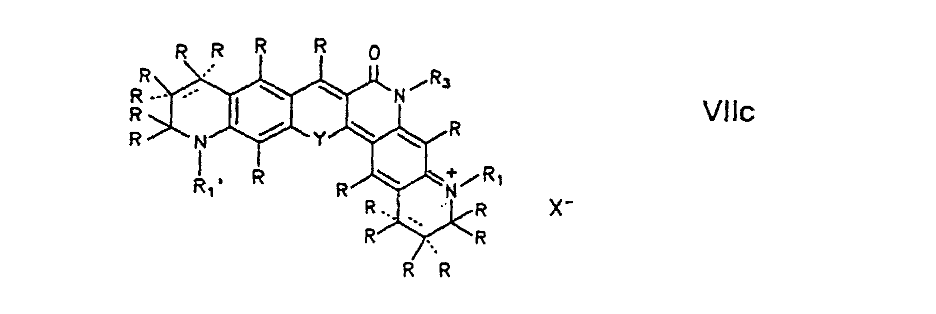 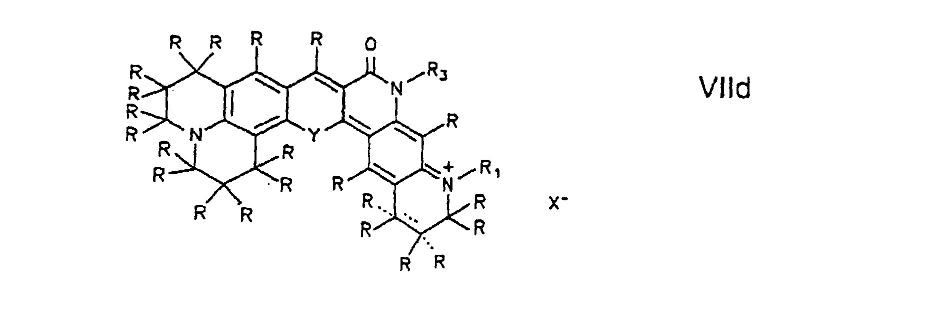 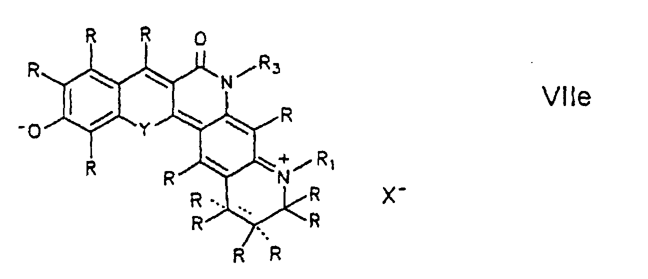 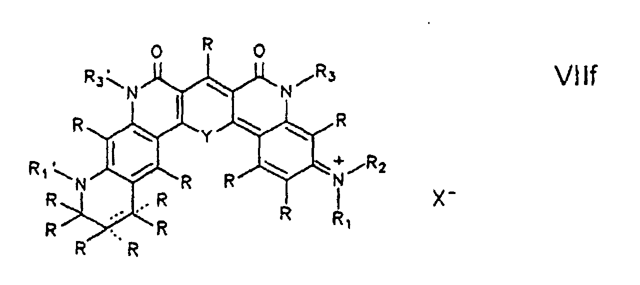 where
the dashed lines are optionally double bonds, and in the presence of the double bonds the radicals R bonded via a dashed line are absent,
X, Y, R₁, R₂ and R₃ are as defined in Claim 4 and 5,
R₁', R₂' and R₃' are as defined in Claim 6 and 7, and
R in each case independently of one another is defined as R₄ in Claim 4.

9. Compounds according to one of Claims 4 to 8,
**characterized in that**
Y is oxygen.

10. Compounds according to one of Claims 4 to 9,
**characterized in that**
R₅ comprises an aromatic, optionally substituted ring system.

11. Compounds according to one of Claims 4 to 10,
**characterized in that**
it has a group capable of covalent coupling.

12. Compounds according to Claim 11,
**characterized in that**
the coupling group is -COOH, -NH₂, -OH or/and -SH.

13. Compounds according to Claim 11 or 12,
**characterized in that**
it is coupled to a carrier or/and to a biomolecule via coupling groups.

14. Compounds according to Claim 13,
**characterized in that**
the carrier is selected from porous glass, ionexchange resins, dextrans, cellulose, cellulose derivatives or/and hydrophilic polymers.

15. Compounds according to Claim 13,
**characterized in that**
the biomolecule is selected from peptides, polypeptides, nucleotides, nucleosides, nucleic acids, nucleic acid analogues or/and haptens.

## Revendications

1. Utilisation des composés de formule générale I 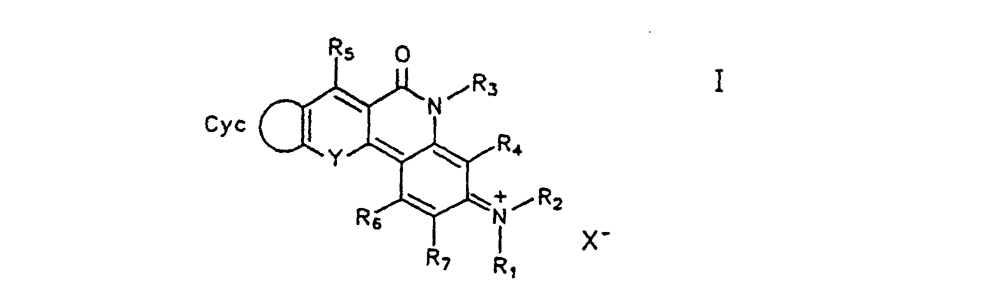 comme groupes marqueurs dans un procédé d'identification d'un analyte, où
Y représente l'oxygène ou N-R₈,
R₁, R₂, R₃ et R₈, à chaque occurrence, représentent, indépendamment, l'hydrogène, un groupe phényle, un groupe phénylalkyle ayant de 1 à 3 atomes de C dans la chaîne alkyle, un groupe polyéther ou hydrocarbure ayant jusqu'à 20 atomes de C, de préférence jusqu'à 6 atomes de C, qui peut contenir éventuellement un ou plusieurs substituants, de préférence choisis parmi les halogènes, les groupes hydroxy, amino, sulfo, carboxy, carbonyle, alcoxy et/ou alcoxycarbonyle, ou un ou plusieurs des radicaux R₁, R₂, R₃ et R₈ forment un système cyclique avec un substituant voisin,
R₄, R₅, R₆ et R₇ représentent, indépendamment, un hydrogène, halogène, phényle, un groupe hydroxy, amino, sulfo ou carboxy ou un groupe hydrocarbure ayant jusqu'à 15 atomes de C, où les groupes hydrocarbure comprennent des radicaux alkyle, alcényle, alcinyle, cycloalkyle, aryle et/ou hétéroaryle et qui peuvent éventuellement contenir respectivement un ou plusieurs substituants, de préférence choisis parmi les halogènes, les groupes hydroxy, amine, sulfo, carboxy, aldéhyde, alcoxy ou/et alcoxycarbonyle,
où un ou plusieurs radicaux R₄, R₆ et R₇ peuvent former un système cyclique avec un substituant voisin,
Cyc représente un radical organique qui comprend un système cyclique choisi parmi des cycles aromatiques, hétéroaromatiques, quinoïdes ou/et cycloaliphatiques, qui peut éventuellement contenir un ou plusieurs substituants, de préférence choisis parmi les halogènes, les groupes aminé, hydroxy, sulfo, carboxy, aldéhyde, alcoxy ou/et alcoxycarbonyle, et
X représente des anions éventuellement présents pour l'équilibre des charges.

2. Utilisation selon la revendication 1, **caractérisée en ce que** le composé I est couplé de manière covalente à un récepteur spécifique à l'analyte à détecter.

3. Utilisation selon la revendication 1 ou 2, **caractérisée en ce que** le procédé de détection est choisi parmi le procédé d'hybridation de l'acide nucléique et les procédés immunochimiques.

4. Composé de formule générale I 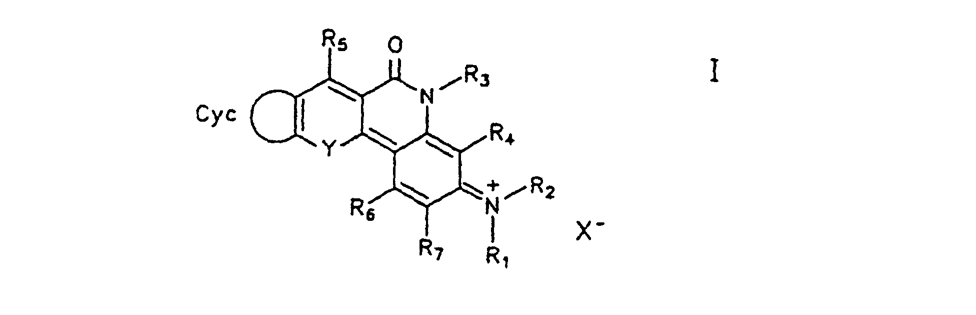
où X, R₁ à R₇ et Cyc ont les significations indiquées dans la revendication 1,
X représente des anions éventuellement présents pour l'équilibre des charges, à la condition que, quand Y est l'oxygène, R₁, R₂ et R₃ sont un groupe méthyle et R₄, R₅, R₆ et R₇ sont l'hydrogène,
Cyc ne présente aucune structure de formules II, III ou IIIa

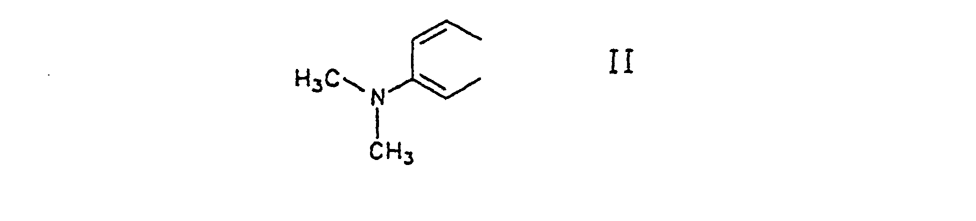

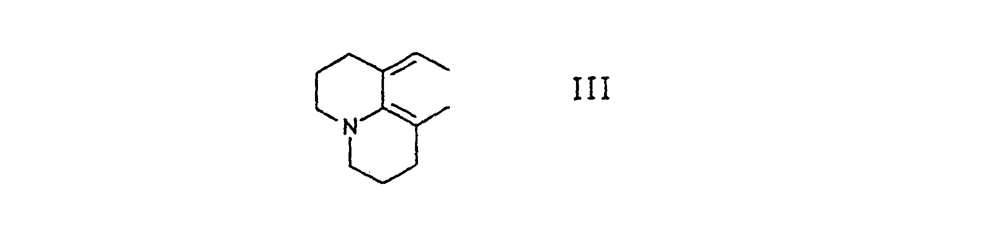

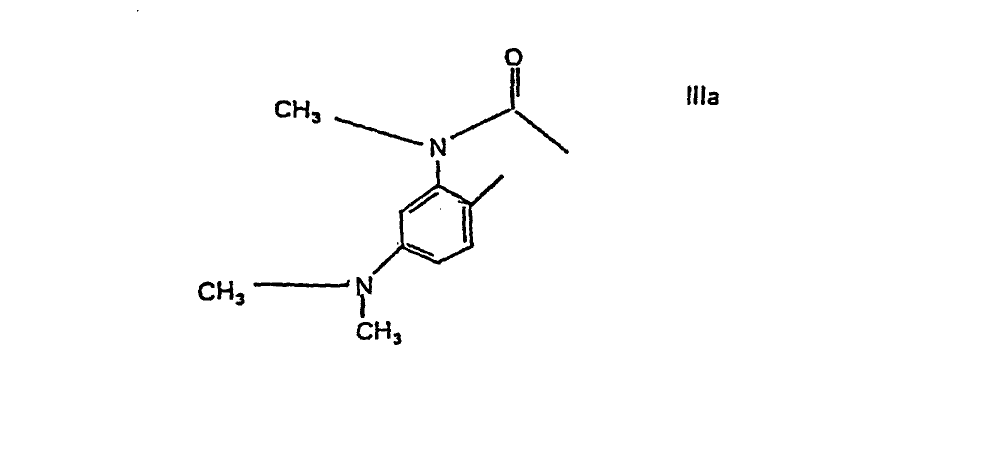

5. Composés selon la revendication 4, **caractérisés en ce que** R₁ est lié à R₇ ou/et R₂ est lié à R₄ et forment un système cyclique en particulier un cycle à 5 ou 6 membres.

6. Composés de formule I selon la revendication 4 ou 5, où Cyc présente une structure de formules IV, V ou VI, 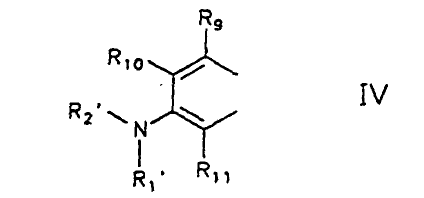 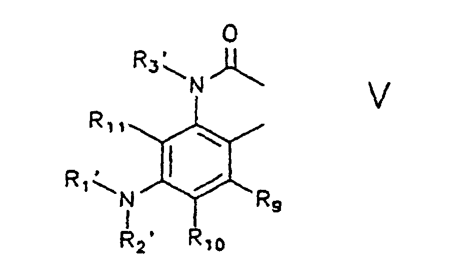 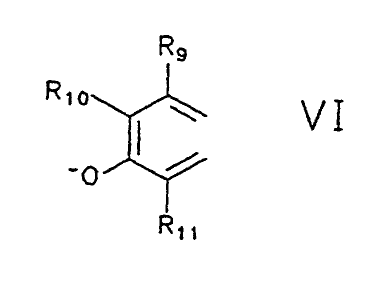
où R₁', R₂' et R₃' sont tels que R₁, R₂ et R₃, définis dans la revendication 1, et R₉ à R₁₁ sont tels que R₄ à R₇, définis dans la revendication 1.

7. Composés selon la revendication 6, **caractérisés en ce que** R₁' est lié à R₁₁ ou/et R₂' est lié à R₁₀ et forment un système cyclique en particulier un cycle à 5 ou 6 membres.

8. Composés selon l'une quelconque des revendications 4 à 7, qui correspondent à l'une des formules générales VIIa à f 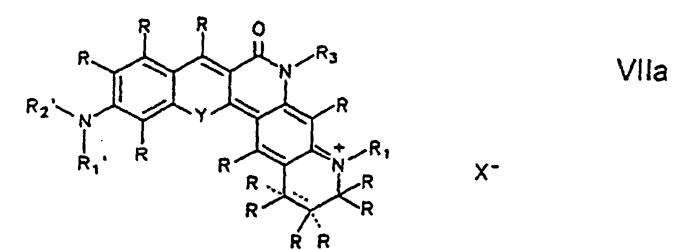 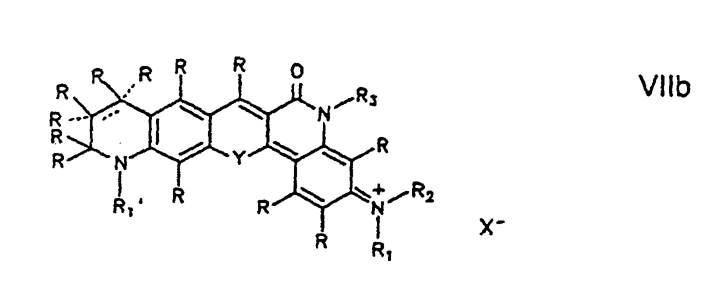 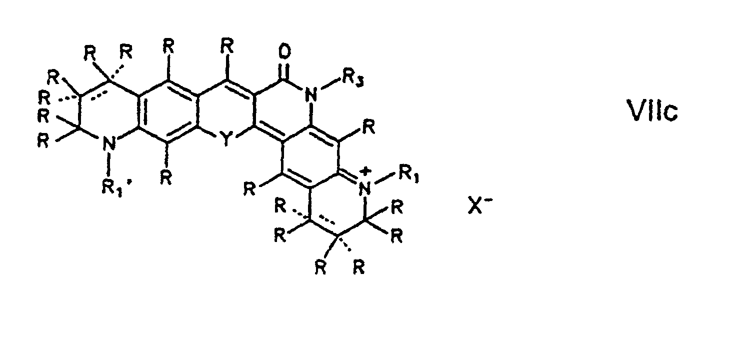 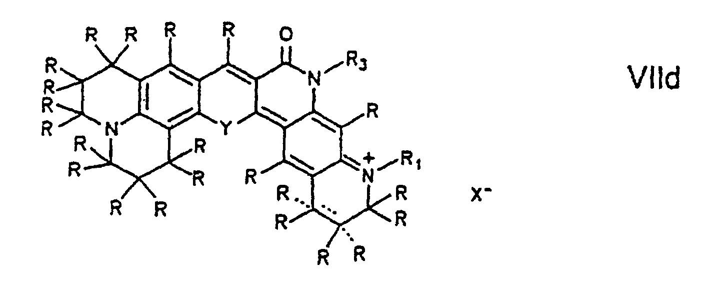 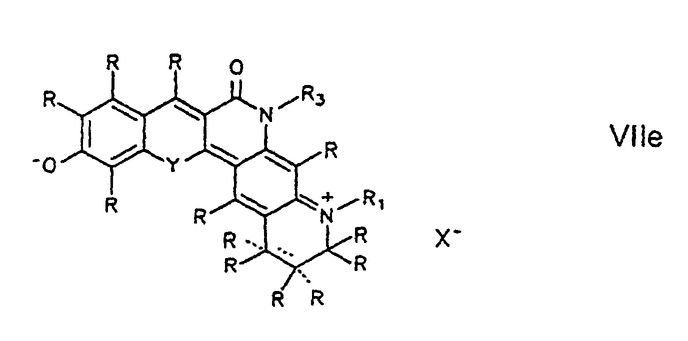 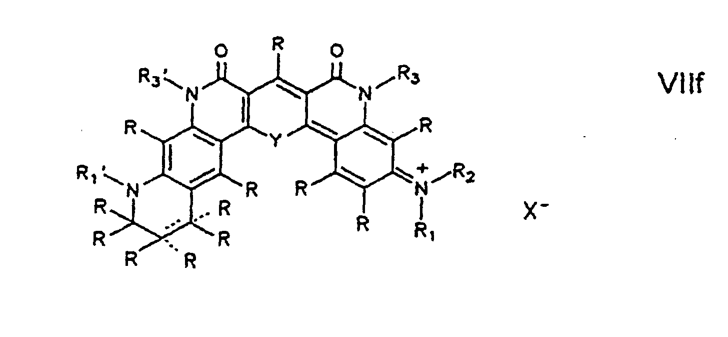 où les lignes en pointillés représentent éventuellement des doubles liaisons et, en présence de doubles liaisons, les radicaux R liés par une ligne en pointillé sont absents,
X, Y, R₁, R₂ et R₃ sont tels que définis dans les revendications 4 et 5,
R₁', R₂' et R₃' sont tels que définis dans les revendications 6 et 7, et
R, respectivement indépendamment, est tel que R₄ est défini dans la revendication 4.

9. Composés selon l'une quelconque des revendications 4 à 8, **caractérisés en ce que** Y est l'oxygène.

10. Composés selon l'une quelconque des revendications 4 à 9, **caractérisés en ce que** R₅ comprend un système cyclique aromatique, éventuellement substitué.

11. Composés selon l'une quelconque des revendications 4 à 10, **caractérisés en ce qu'**ils présentent un groupe susceptible de couplage covalent.

12. Composés selon la revendication 11, **caractérisés en ce que** le groupe de couplage est -COOH, -NH₂, -OH ou/et - SH.

13. Composés selon la revendication 11 ou 12, **caractérisés en ce qu'**ils sont couplés à un support ou/et à une biomolécule par le biais de groupes de couplage.

14. Composés selon la revendication 13, **caractérisés en ce que** le support est choisi parmi le verre poreux, les résines échangeuses d'ions, les matières plastiques, les dextranes, la cellulose, les dérivés cellulosiques ou/et les polymères hydrophiles.

15. Composés selon la revendication 13, **caractérisés en ce que** la biomolécule est choisie parmi les peptides, les polypeptides, les nucléotides, les nucléosides, les acides nucléiques, les analogues d'acides nucléiques ou/les haptènes.
